# EUROPÄISCHE PATENTSCHRIFT

(11) **EP 2 885 338 B1**
(45) Veröffentlichungstag und Bekanntmachung des Hinweises auf die Patenterteilung: **29.05.2019**
(21) Anmeldenummer: 13750570.7
(22) Anmeldetag: 16.08.2013
(51) Int. Cl.: C08G 73/06, C08J 11/04

(54) **VERFAHREN ZUR WIEDERVERWERTUNG VON RECYCELTEN POLYCYANURATHALTIGEN MATERIALIEN IN NEUEN POLYMEREN WERKSTOFFEN**
PROCESS FOR REUTILIZATION OF RECYCLED POLYCYANURATE-CONTAINING MATERIALS IN NEW POLYMERIC MATERIALS
PROCÉDÉ DE RÉUTILISATION DE MATIÈRES RECYCLÉES CONTENANT DU POLYCYANURATE DANS DE NOUVEAUX MATÉRIAUX POLYMÈRES

(30) Priorität: 17.08.2012 DE 102012107586; 13.12.2012 DE 102012112254
(43) Veröffentlichungstag der Anmeldung: 24.06.2015
(73) Patentinhaber: Fraunhofer-Gesellschaft zur Förderung der angewandten Forschung e.V., 80686 München (DE)
(72) Erfinder: SÖTHJE, Dominik, 12167 Berlin (DE); BAUER, Monika, 15712 Königs-Wusterhausen (DE); DREYER, Christian, 55758 Niederwörresbach (DE)
(74) Vertreter: Strehl Schübel-Hopf & Partner
(86) Internationale Anmeldenummer: PCT/EP2013/067192
(87) Internationale Veröffentlichungsnummer: WO 2014/027104

(56) Entgegenhaltungen:
- US-A- 3 983 087
- US-A- 5 691 388

## Beschreibung

Die vorliegende Erfindung betrifft ein Verfahren, mit dem sich alle Zersetzungskomponenten eines einer Aminolyse oder Alkoholyse unterworfenen cyanurathaltigen Polymers unter Ausbildung eines neuen Polymers wiederverwerten lassen.

Polycyanurate können durch Polycyclotrimerisierung aus di- oder polyfunktionellen Cyanaten hergestellt werden. Die erfindungsgemäß zum Einsatz kommenden polycyanurathaltigen Materialien weisen grundsätzlich das nachstehende Strukturelement I auf.

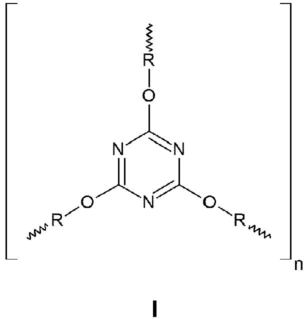

Polycyanurathaltige Prepolymere, wie sie in der Kunststofftechnik häufig zum Einsatz kommen, zeigen beispielsweise das Strukturelement II.

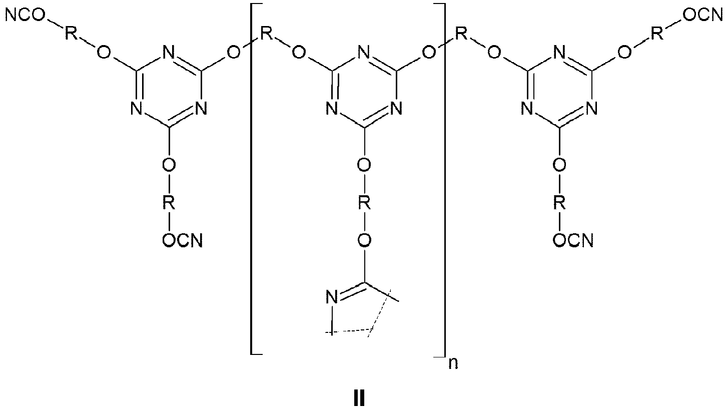

Derartige polycyanurathaltige Materialien, d.h. die fertigen Kunststoffe wie auch die Prepolymere, können beispielsweise aus Verbindungen der Formeln III bis VII erhalten werden, deren die Cyanatgruppen verbindender zweiwertiger Rest dem Rest R in den Formeln I und II entspricht: 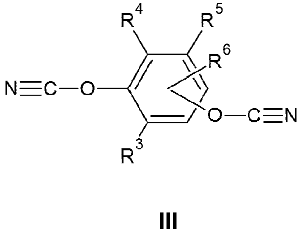 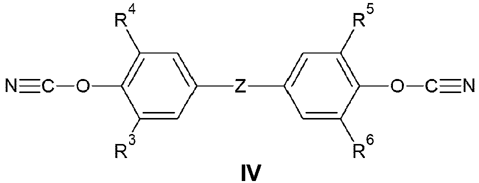 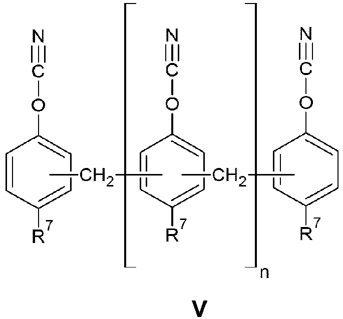 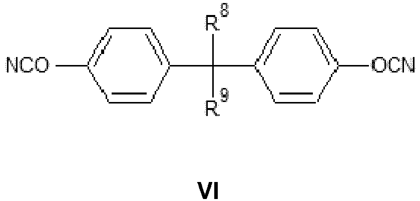 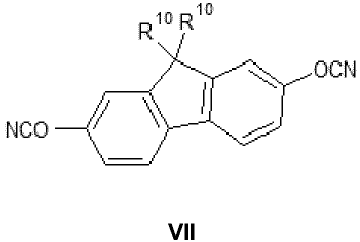 worin R³ bis R⁶ unabhängig voneinander H, C₁-C₁₀-Alkyl, C₃-C₈-Cycloalkyl, C₁-C₁₀-Alkoxy, Halogen oder Phenyl sind, wobei die Alkyl- oder Arylgruppen fluoriert oder teilfluoriert sein können; Z eine chemische Bindung, SO₂, CF₂, CH₂, CH(CH₃), Isopropyl, Hexafluorisopropyl, Alkyl, O, NR⁷, N=N, CH=CH, CO-O, CH=N, CH=N-N=CH, Alkyl-O-alkyl mit C₁-C₈-Alkyl, Dicyclopentadienyl, S, C(CH₃)₂ oder C(CH₃)₂-Phenyl-C(CH₃)₂ darstellt, R⁷ H, C₁-C₁₀-Alkyl, vorzugsweise C₁-C₅-Alkyl ist; R⁸ und R⁹ jeweils unabhängig voneinander H, unsubstituiertes oder mit OCN substituiertes Aryl, insbesondere unsubstituiertes oder mit OCN substituiertes Phenyl, unsubstituiertes oder substituiertes, insbesondere fluoriertes oder teilfluoriertes Alkyl, vorzugsweise C₁-C₅-Alkyl und besonders bevorzugt CH₃ oder CF₃ sein kann; R¹⁰ unsubstituiertes oder mit OCN substituiertes Aryl, insbesondere unsubstituiertes oder mit OCN substituiertes Phenyl, unsubstituiertes oder substituiertes, insbesondere fluoriertes oder teilfluoriertes Alkyl, vorzugsweise C₁-C₅-Alkyl und besonders bevorzugt CH₃ oder CF₃ sein kann; und n 0 bis 20 ist.

Eine weitere Gruppe kann beispielsweise aus Verbindungen der Formel VIII bis X erhalten werden: 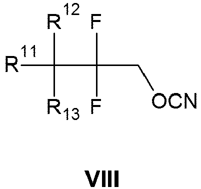 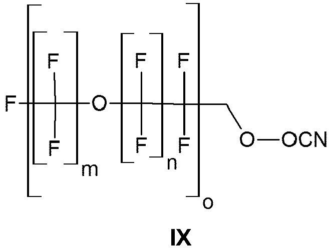 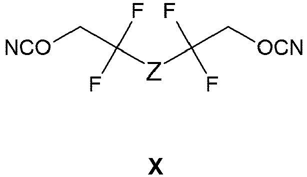 worin R¹¹ bis R¹³ Alkylen-Gruppen mit 1, 2 oder mehr Kohlenstoffatomen sind, die teilweise oder vollständig fluoriert sein können. Beispiele sind -CH₃, -CH₂-CH₃, -CH=CH₂, -CHF-CF₃ oder aber auch -C(R')₂-R"-C(R')₃, wobei die Reste R' gleich oder verschieden sein können und ein Wasserstoff- oder Fluoratom oder eine weitere, optional substituierte und bevorzugt fluorierte Alkyl- oder Alkenyl-Gruppe mit vorzugsweise 1 bis 6, stärker bevorzugt 2 bis 4 Kohlenstoffatomen bedeuten und der Rest R" eine nichtaromatische, mindestens eine Doppelbindung enthaltende Kohlenwasserstoffgruppe, bevorzugt eine Alkenylen-Gruppe mit 2 bis 12 Kohlenstoffatomen ist. Die Indices m, n und o in der Formel IX liegen hierbei unabhängig voneinander bevorzugt zwischen 0 und 12; während in Formel X Z beispielsweise eine chemische Gruppe sein kann, ausgewählt unter SO₂, CF₂, CH₂, CHF, CH(CH₃)₂, Isopropylen, Hexafluorisopropylen, fluoriertem oder teilfluoriertem n-oder iso-C₁-C₁₈-Alkylengruppen, O, NR¹⁴, N=N, CH=CH, -(C=O)-O-, CH=N, -C=C-, Alkyl-O-alkyl mit 1 bis 18 Kohlenstoffatomen, die optional teilweise oder vollständig fluoriert sind, S, Si(CH₃)₂, Si(CH)₂-[O-Si(CH₃)₂]ₚ wobei p zwischen 1 und 12 liegt, oder 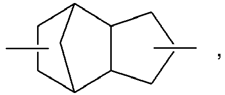 wobei R¹⁴ ein Wasserstoff oder ein C₁-C₁₈ Alkyl ist.

Es sei darauf hingewiesen, dass die obige Aufzählung beispielhaft und nicht vollständig ist.

Weitere Di- und Polycyanate zur Herstellung von polycyanurathaltigen Polymeren sind bekannt; daraus abgeleitete polycyanurathaltige Materialien, darunter Copolymere mit verschiedenen Coreaktanden wie Phenolen oder Monocyanaten können ebenfalls erfindungsgemäß zerlegt und wiederverwertet werden.

Polycyanurathaltige Materialien lassen sich mittels Aminolyse mit einem wenigstens eine reaktive NH₂-Gruppe enthaltenden Agens zu überwiegend monomeren Produkten bestimmter chemischer Zusammensetzung zerlegen. Durch die Auswahl geeigneter Aminolyseagenzien erhält man als Hauptrecyclingprodukte di- und/oder polyfunktionelle Amine und/oder Alkohole, wie aus DE 44 32 965 C1 bekannt. Dieser Druckschrift entnimmt der Fachmann auch, dass sich diese Materialien dem Grunde nach wenigstens teilweise als Ausgangsstoffe für neue Polymere wie Polyurethane, Melaminharze, Epoxidharze, Polyester oder Polycarbonate eignen könnten. Bisher hat man dabei versucht, einzelne Bestandteile, nämlich die anfallenden di- bzw. polyfunktionellen Phenole, aus dem restlichen Produktgemisch abzutrennen, was einen erheblichen Aufwand bedeutet, weil man davon ausgegangen ist, dass diese wieder in die entsprechenden di- bzw. polyfunktionellen Cyanate umgewandelt werden und damit als Ausgangsstoffe für neue polycyanurathaltige Materialien eingesetzt werden können.

Das folgende Reaktionsschema 1a zeigt ganz allgemein die Zersetzung eines triazin- bzw. cyanuratgruppenhaltigen Netzwerks mit Hilfe eines primären oder sekundären Amins.

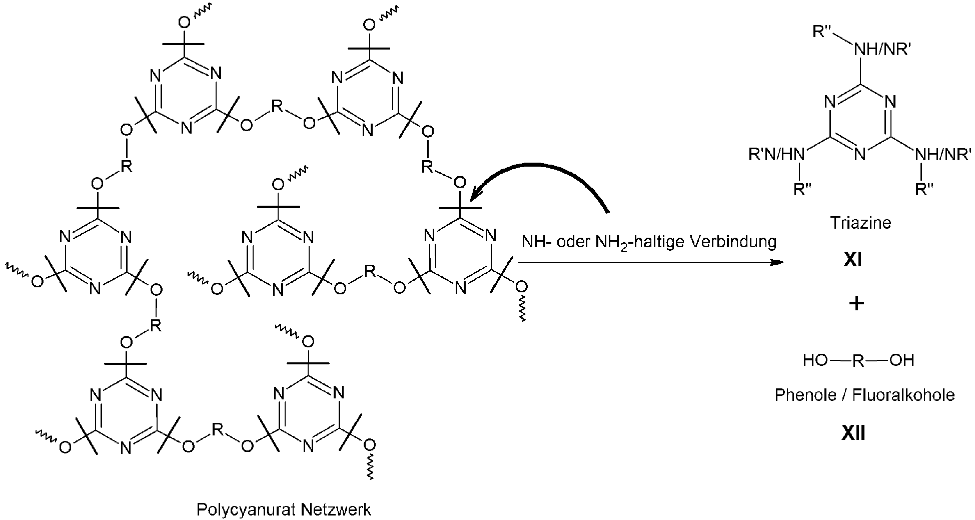

Die Erfinder haben nun völlig überraschend gefunden, dass bei geeigneter Reaktionsführung der Aminolyse Produkte entstehen, die sich ohne jede Aufarbeitung mit weiteren Ausgangsmaterialien, nämlich spezifischen di- oder höherfunktionellen Verbindungen sowie - zumindest im Falle von Aminoalkoholen, Aminophenolen, Monoaminen und Ammoniak als Aminolyse-Reagens - Aldehyden so kombinieren lassen, dass Mischungen zur Herstellung von Polymeren entstehen, deren Aushärtung zu gleichmäßigen Formkörpern mit guten mechanischen Eigenschaften möglich ist. Diese Mischungen können in vorteilhafter Weise lösungsmittelfrei bereitet werden; es lassen sich je nach Ausführung Additionspolymere oder Kondensationspolymere herstellen. Soweit bei der Aushärtung durch physikalische oder chemische Treibmittel gasförmige Produkte entstehen, lassen sich auch Schäume mit homogener Zellstruktur erhalten. Insbesondere konnten die Erfinder feststellen, dass dieser erneute Aufbau von Polymeren ohne Abtrennung einzelner Komponenten des gebildeten Aminolyse-Produkts gelingt, zumindest, wenn das Aminolyse-Reagens unverdünnt eingesetzt wird. Sogar eine vorhergehende Zerkleinerung des zu recycelnden Materials ist in der Regel nicht erforderlich, wie die Erfinder anhand von auch dicken Probenblöcken feststellen konnten.

Des Weiteren haben die Erfinder überraschend feststellen können, dass die Zerlegung der Polycyanurate in Triazine und Phenole und/oder Fluoralkohole nicht nur mittels Aminolyse gelingt, sondern auch mittels Alkoholyse mit Mono-, di- oder höherfunktionellen Alkoholen möglich ist. Dies ist im nachfolgenden Schema 1b dargestellt.

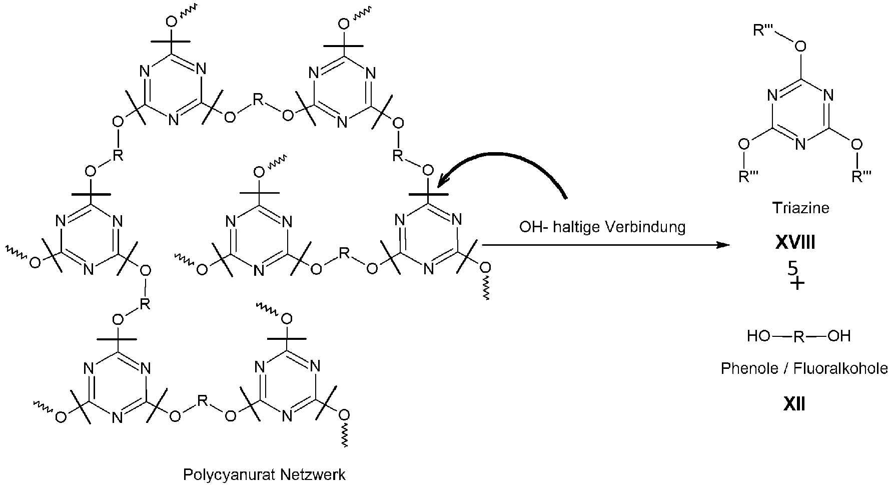

Demnach stellt die Erfindung ein Verfahren zum Herstellen eines organischen Polymermaterials bereit, dessen Herstellung mindestens eine hydroxyl- und/oder aminogruppenhaltige Verbindung als Ausgangskomponente erfordert, umfassend die Schritte:
- Bereitstellen eines Materials, das durch Aminolyse und/oder Alkoholyse eines Cyanurat-Polymers entstanden ist,
- Umsetzen dieses Materials mit mindestens einer Verbindung, ausgewählt unter di- oder höherfunktionellen Verbindungen, deren funktionelle Gruppen mit Hydroxygruppen oder Aminogruppen reagieren können, oder Aldehyden und
- Aushärten des Gemischs durch eine Vernetzungsreaktion.

Neben der genannte di- oder höherfunktionellen Verbindung, deren funktionelle Gruppen mit Hydroxygruppen oder Aminogruppen reagieren können, ist der Zusatz eines gewissen Anteils an monofunktioneller Verbindung möglich, beispielsweise, um sie als Endgruppen einzusetzen, mit denen sich ein Kettenabbruch provozieren lässt, was wiederum die Struktur des Netzwerkes beeinflusst.

Als "difunktionell" im Sinne der Erfindung sollen alle solchen Verbindungen verstanden werden, die zwei Reste besitzen, welche mit anderen Resten eine Reaktion eingehen können, beispielsweise eine Substitutionsreaktion, eine Kondensationsreaktion oder eine Polymerisationsreaktion oder Polyadditionsreaktion. Die beiden Reste können identisch oder unterschiedlich sein. Dabei sollen auch Verbindungen unter diese Definition fallen, die einen reaktiven Rest in Kombination mit einer polymerisierbaren C=C-Doppelbindung aufweisen. Mit "Cyanurat-Polymer" bezeichnet die Erfindung alle Polymere, die unter Verwendung von Cyanatkomponenten entstanden sind, also Polymere, die ausschließlich aus Di- oder höheren Cyanaten, ggf. in Kombination mit einem gewissen Anteil an Monocyanaten, gebildet sind, solche, die in Gegenwart von Phenolen, Monocyanaten oder anderen Coreaktanden erzeugt wurden, sowie Copolymere der vorgenannten Polymere mit weiteren, beliebigen Komponenten. Es ist bevorzugt, dass der molare Cyanat-Anteil darin (bezogen auf die Anzahl der ursprünglichen Cyanatgruppen) bei nicht weniger als 30%, stärker bevorzugt bei nicht weniger als 60% liegt; dies ist jedoch nicht Bedingung.

In allen möglichen Ausführungsformen entsteht durch die Aminolyse oder Alkoholyse ein Triazinderivat oder eine Mischung aus Triazinderivaten neben einer meist mono-, di- oder höherfunktionellen hydroxylgruppenhaltigen Verbindung oder einer Mischung aus hydroxylgruppenhaltigen Verbindungen, bei der es sich je nach Ausgangsmaterial um ein Phenol oder einen aliphatischen, dann meist di- oder höherfunktionellen teilfluorierten Alkohol handelt. Die Erfinder haben erstmals diese Konstellation als vorteilhaft erkannt, weil bei der erfindungsgemäßen Auswahl des Agens für den Abbau des Cyanurat-Polymers sowohl das bei der Aminolyse und/oder Alkoholyse entstehende Triazin als auch die hydroxylhaltige Verbindung (ein Phenol und/oder ein Fluoralkohol) eine Kombination aus reaktiven Bausteinen darstellt. Werden diese Komponenten mit entsprechenden weiteren Polymerbausteinen ergänzt, lassen sie sich vollständig und verlustfrei mit diesen zusammen zu neuen Polymeren umsetzen. Dabei werden alle diese Bausteine mit wenigen Ausnahmen in das Netzwerk des neuen Polymers eingebaut. Bei diesen Ausnahmen handelt es sich um die unten näher dargestellte Entstehung von Triazinderivaten ohne reaktive Funktionen, die im Polymer unvernetzt vorliegen und damit einen brandhemmenden Füllstoff darstellen, sowie von Triazingruppen mit (aliphatischen) Alkoholgruppen, die bei der Herstellung von Phenolharzen nicht in diese einpolymerisiert werden, in diesen Phenolharzen jedoch die Eigenschaft eines Weichmachers besitzen. Auch im umgekehrten Fall, dass das anfallende Triazinderivat phenolische Hydroxygruppen besitzt und gleichzeitig ein aliphatischer, insbesondere teilfluorierter Alkohol entsteht, kann der aliphatische Alkohol die Funktion eines Weichmachers übernehmen. Somit lassen sich auch in diesen Ausnahmefällen die Abbauprodukte sinnvoll und vollständig in den neuaufgebauten Polymeren nutzen.

Vorzugsweise wurde oder wird das genannte Material durch Aminolyse mit einem Aminolysereagens, ausgewählt unter Ammoniak, einem Amin der Formel (1)

NH₂-R"-X (1)

oder einem Amin der Formel (2)

R'-NH-R"-X (2)

und/oder durch Alkoholyse mit einem Alkoholysereagens, ausgewählt unter Hydroxylverbindungen der Formel (3)

R"'-OH (3)

(im Kombinationsfall durch den Einsatz von Mischungen der genannten Reagentien) durchgeführt, worin R" ein zweibindiger, ggf. substituierter Kohlenwasserstoffrest ist, X ausgewählt ist unter H, OH, NH₂ und NHR' und R' eine unsubstituierte oder mit mindestens einer Hydroxygruppe substituierte Alkylgruppe oder eine unsubstituierte oder mit Alkyl substituierte Arylgruppe ist und R'" eine unsubstituierte oder mit mindestens einer Hydroxygruppe substituierte Alkylgruppe oder eine unsubstituierte oder substituierte Arylgruppe ist, wobei die Arylgruppe im letzteren Fall mit einem oder mehreren Substituenten substituiert ist, ausgewählt unter Alkyl, Aryl, Hydroxy, Hydroxyalkyl und Hydroxyaryl.

Die Bezeichnungen R', R" und R"', wie sie in den Formeln (1) bis (3) verwendet werden, finden sich auch in den nachfolgenden schematischen Darstellungen, wo sie das Auffinden der jeweiligen Komponenten als Bestandteile im gebildeten Netzwerk erleichtern sollen.

In einer ersten Ausführungsform der Erfindung wird für die Aminolyse ein aliphatischer Aminoalkohol oder eine aromatische Verbindung (ein Aminophenol) eingesetzt, also ein Aminolysereagens der Formeln (1) oder (2), worin X OH bedeutet. Im ersteren Falle ist R" eine geradkettige oder verzweigte oder cyclische Alkylen- oder Alkenylengruppe mit vorzugsweise 1 bis 8 Kohlenstoffatomen, im letzteren Fall eine fakultativ substituierte, z.B. alkylsubstituierte Arylengruppe mit vorzugweise 6 bis 18 Kohlenstoffatomen. In allen Fällen handelt es sich bei R' um eine Alkylgruppe mit vorzugsweise 1-6 Kohlenstoffatomen oder eine fakultativ mit Alkyl (das vorzugsweise 1-3 Kohlenstoffatome aufweist) substituierte Arylgruppe.

In dieser Ausführungsform der Erfindung fallen ausschließlich Produkte an, die Hydroxygruppen tragen (siehe die nachfolgenden Strukturen XIII und XIV). Bei der Aminolyse wird der Cyanurat-Ring nicht zerstört; die Ethergruppen an den Ring-Kohlenstoffatomen werden aminolysiert, d.h. es entstehen bei Verwendung von Aminoalkoholen drei Gruppierungen C-NH-R"-OH oder C-NR'-R"-OH am Ring. Da Cyanurate meist unter Verwendung von aromatischen Cyanaten hergestellt wurden, entstehen in all diesen Fällen weiterhin Phenol-Verbindungen. Das Verfahren lässt sich jedoch auch mit aliphatischen teilfluorierten Polycyanuraten durchführen, wobei dann anstelle der Phenole Fluoralkohole entstehen. Wenn das Polycyanurat z.B. aus oder unter Verwendung von Bisphenol-A-Dicyanat hergestellt wurde, fällt bei der Aminolyse Bisphenol A an. Das Produktgemisch der Aminolyse kann daher Hydroxyverbindungen enthalten, die als lineares Kettensegment dienen (Struktur XIV), enthält aber immer auch Hydroxyverbindungen (Struktur XIII), die zur Vernetzung des späteren Kunststoffs beitragen können.

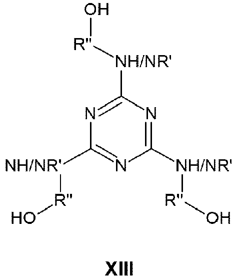

HO-R-OH **XIV**

Das Aminolyse-Produkt kann in dieser Ausführungsform mit einer Vielzahl von Monomeren oder Prepolymeren kombiniert werden, die mit mono-, di- bzw. höherfunktionellen Alkoholen/Phenolen unter Ausbildung eines Netzwerkes reagieren können.

Hier sind an vorderster Stelle Isocyanate zu nennen, mit denen sich Polyurethane erhalten lassen (Variante a). Diese Umsetzung ist anhand der Verwendung eines Diisocyanats beispielhaft im nachstehenden Reaktionsschema 2 gezeigt, woraus sich ersehen lässt, dass Urethangruppen gebildet werden, die ein Netzwerk mit den Strukturelementen der Verbindung XIII und XIV bilden.

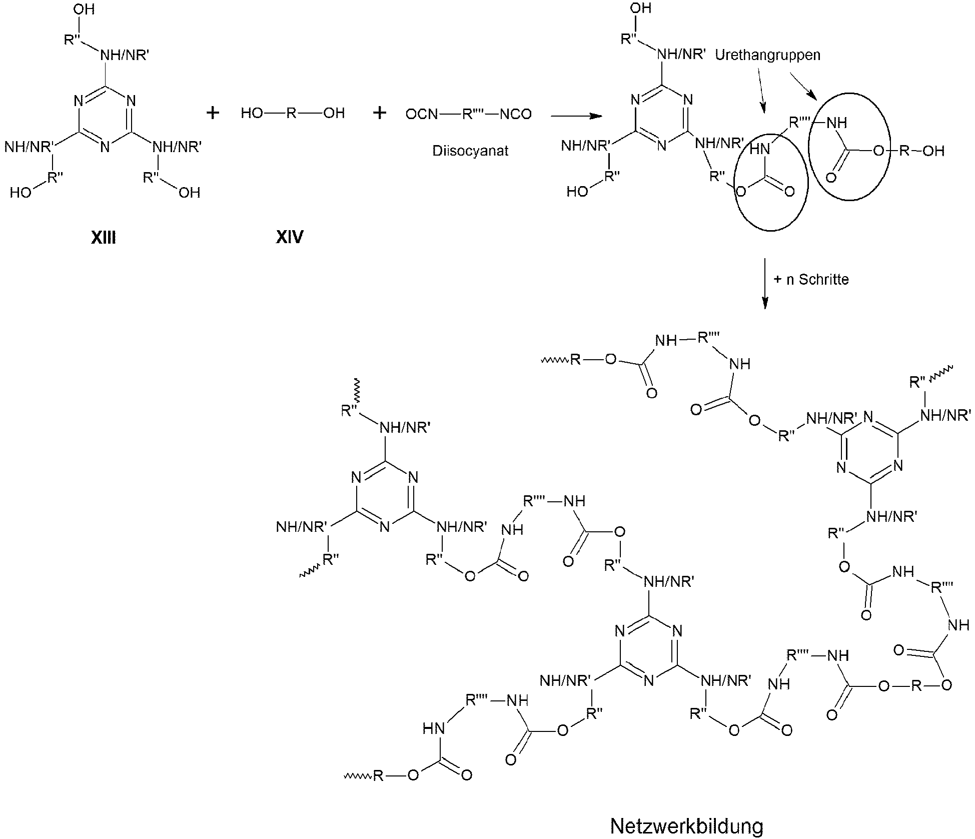

Gegebenenfalls können neben Di- oder Polyisocyanaten weiterhin hydroxygruppenhaltige Kettenverlängerungsmittel wie 1,4-Butandiol oder hydroxygruppenhaltige Vernetzer wie Glycerin zugegeben werden. Mit z. B. Wasser als Treibmittel lassen sich auch Schäume erhalten.

Unter Anwendung der Epoxidierung mittels Epichlorhydrin werden epoxidgruppenhaltige Komponenten erhalten, die dann z. B. mit Aminen oder Anhydriden ausgehärtet werden können (Variante b) (siehe das nachfolgende Reaktionsschema 3, das die Epoxidierung der bei der Aminolyse entstehenden Produkte und die anschließende Aushärtung und Netzwerkbildung mit einem Amin zeigt).

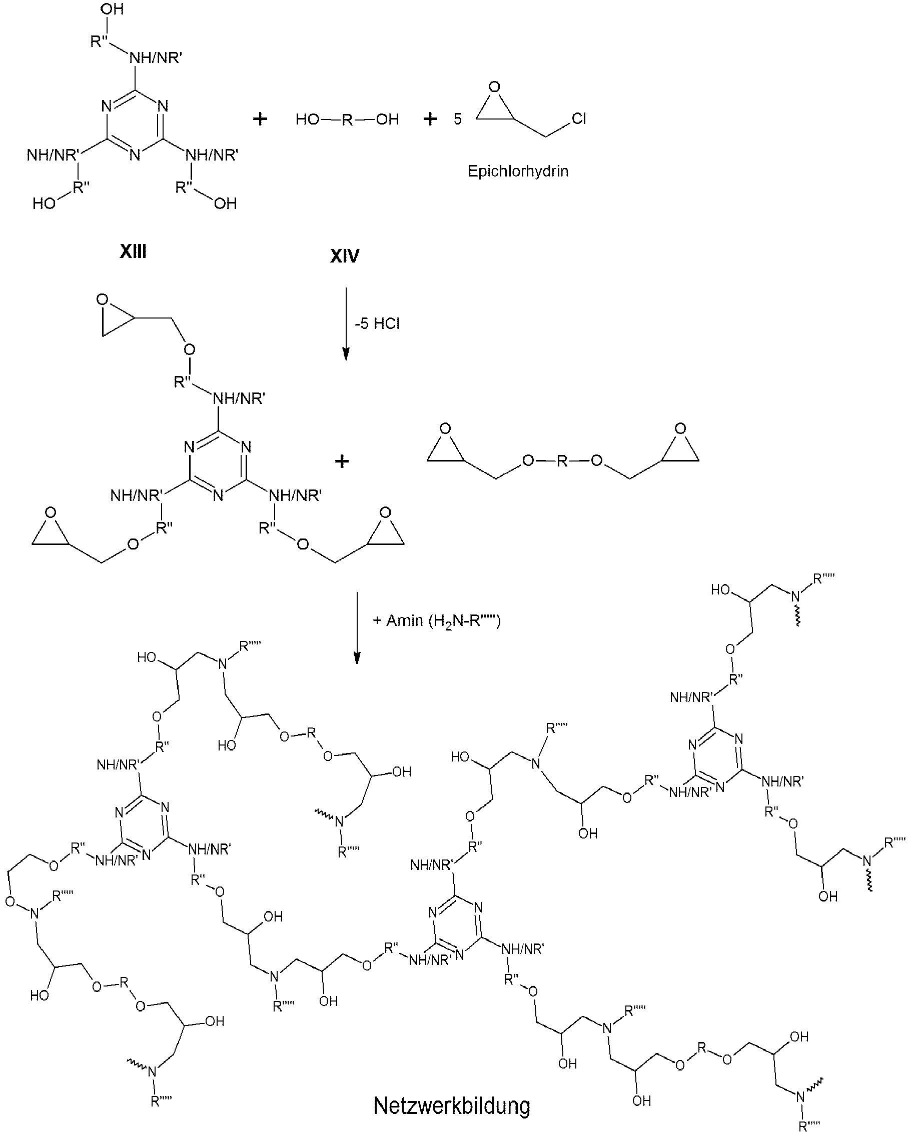

Es können aber auch di- oder höherfunktionelle Carbonsäuren bzw. deren Derivate verwendet werden (Variante c), um zu ungesättigten oder gesättigten Polyestern zu kommen, je nachdem, ob gesättigte oder ungesättigte Carbonsäuren bzw. Carbonsäurederivate eingesetzt werden. Ungesättigte Polyester können dann weiter mit Styrol vernetzt werden. Da das Cyanurat-Abbauprodukt drei Hydroxygruppen aufweist, ist eine Vernetzung aber auch ohne Styrol gewährleistet. Das nachfolgende Reaktionsschema 4 zeigt beispielhaft die entsprechende Herstellung eines ungesättigten Polyesters mit anschließender Vernetzung (Aushärtung) mit Styrol, ausgehend von den Abbauprodukten des Strukturtyps XIII und XIV und einer Dicarbonsäure.

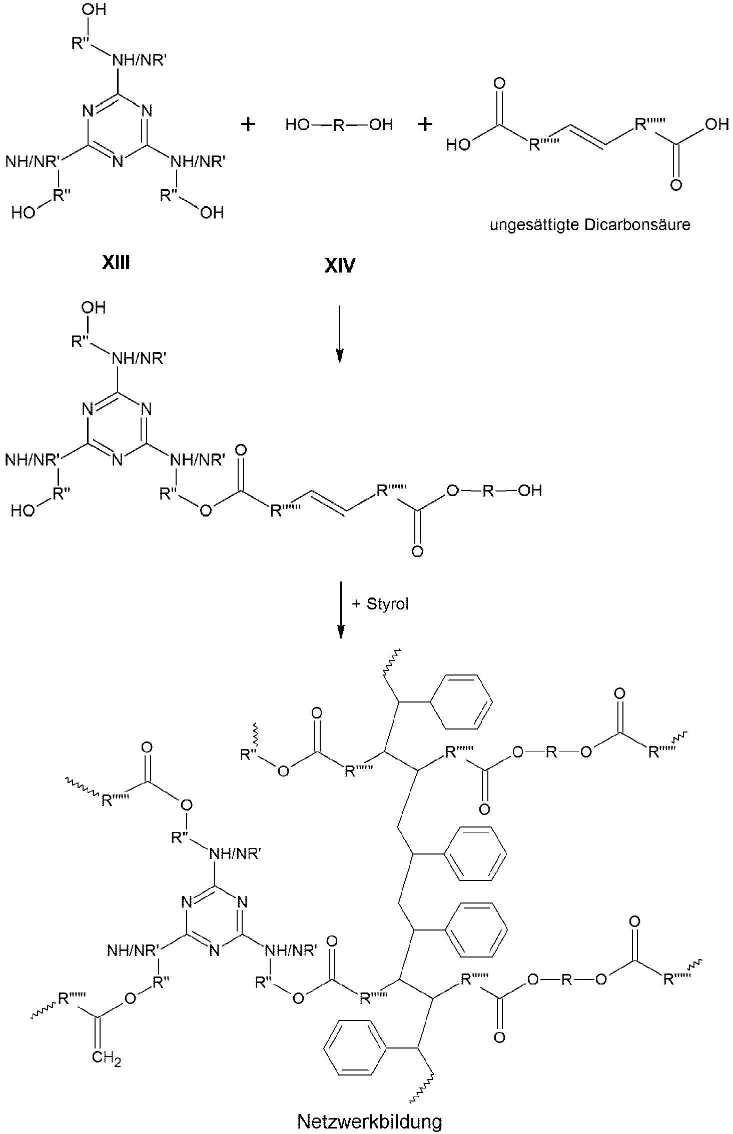

Mittels einer weiteren Variante (Variante d) lassen sich Polymere erhalten, die über die darin vorhandenen C=C-Doppelbindungen radikalisch vernetzt werden können, und z.B. Polyacrylate oder -methacrylate oder Polyperfluorcyclobutanpolymere (PFCB-Polymere) bilden. Hierfür werden α,β-ungesättigte aktivierte Carbonsäuren oder Derivate wie die entsprechenden Chloride oder Anhydride, beispielsweise Acrylsäure-, Methacrylsäure- oder Trifluorovinyloxyderivate, mit den Abbauprodukten der Aminolyse umgesetzt. Die Härtung erfolgt anschließend radikalisch z.B. direkt thermisch wie bei den PFCB-Polymeren oder nach eventueller Zugabe eines Radikalinitiators thermisch oder UV-initiiert, alternativ beispielsweise auch ohne Initiator mittels Elektronenstrahlhärtung. Bei dieser Variante können die Hydroxylgruppen der Aminolyse-Abbauprodukte z.B. mit den Carbonsäurechlorid-Gruppen reagieren. Dies ist schematisch anhand der nachfolgenden Umsetzung 5 der Recyclingprodukte XIII und XIV mit einem Säurechlorid gezeigt. Es ist ersichtlich, dass aufgrund des höherfunktionellen Abbauproduktes XIII durch die Umsetzung mit dem C=C-doppelbindungshaltigen reaktiven Carbonsäurederivat auch höherfunktionelle Bausteine entstehen, die dann bei einer späteren Aushärtung als Vernetzer dienen.

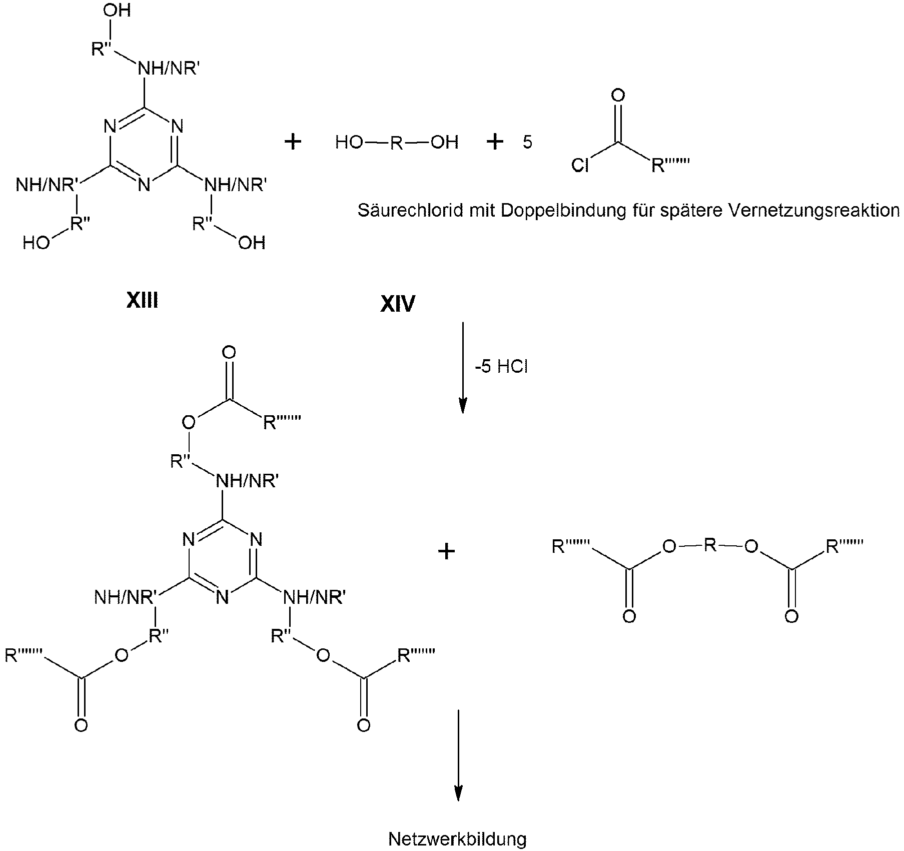

Unter Nutzung dieser Ausführungsform der Erfindung lassen sich in einer weiteren Variante (Variante e), die bei Verwendung von aromatischen Cyanatharzen als Ausgangsmaterial oder Aminophenolen als Recyclingagens angewandt werden kann, Phenolharze erzeugen. Ist das bei der Aminolyse eingesetzte Amin ein Aminophenol sowie das eingesetzte Ausgangsmaterial ein aromatisches Polycyanurat, so werden alle Reaktionsprodukte in das Polymernetzwerk eingebaut. Wird für die Aminolyse ein Aminoalkohol eingesetzt, so wirken die Triazinringe mit den endständigen aliphatischen OH-Gruppen als Weichmacher. Dies kann zu einer gewünschten Auflockerung des Polymernetzwerkes führen. Wird ein Aminophenol eingesetzt und war das Ausgangsmaterial ein aliphatisches teilfluoriertes Polycyanurat, so übernimmt der daraus entstehende Fluoralkohol die Funktion des Weichmachers, und das mit Aminoalkoholen umgesetzte Triazinderivat vernetzt mit Formaldehyd. Hierfür werden die Abbauprodukte mit einem Aldehyd, vorzugsweise Formaldehyd, umgesetzt. Das nachfolgende Reaktionsschema 6 zeigt beispielhaft die Reaktion der Abbauprodukte des Strukturtyps XIII und XIV mit Formaldehyd zu einem Resol und die anschließende Netzwerkbildung. Eine solche Phenolharz-Herstellung erfolgt basenkatalysiert. Eine weitere Möglichkeit ist die säurekatalysierte Umsetzung mit Formaldehyd zu Novolaken, die dann anschließend mit Urotropin (Hexamethylentetramin) vernetzt werden können.

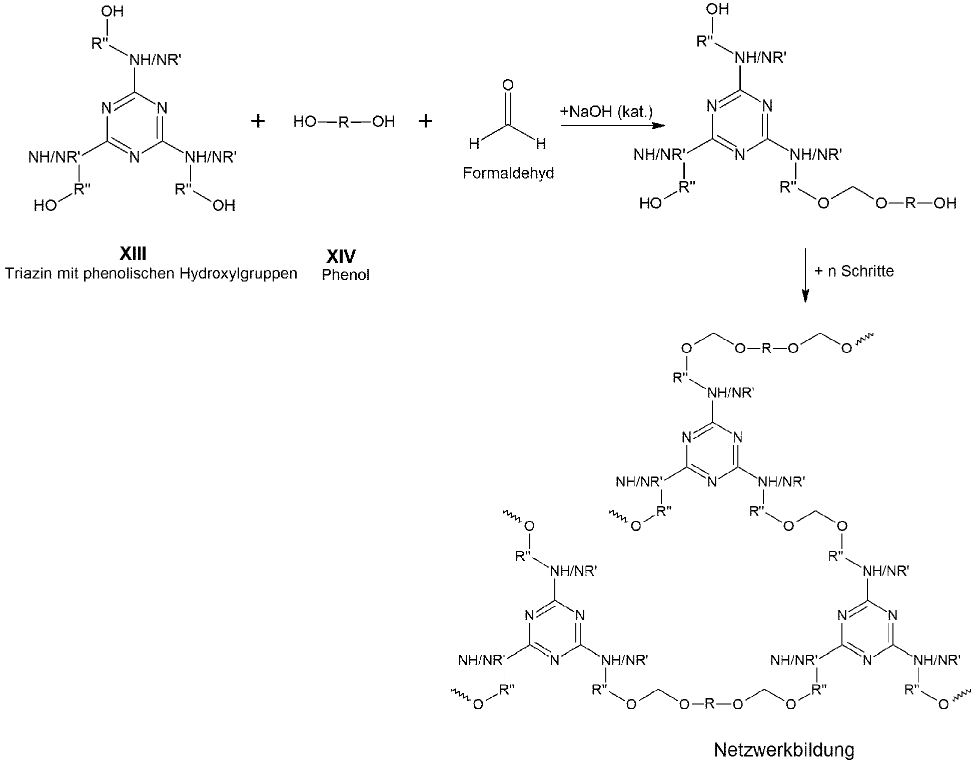

Nach Durchführung der Zersetzung des Polycyanurates mit einem Aminophenol ist auch die erneute Herstellung von Polycyanuraten mittels Bromcyan und anschließender Vernetzung, eventuell unter Verwendung weiterer mono-, di- oder polyfunktioneller Cyanate, möglich (Variante f). Mit Bromcyan lassen sich alle vorhandenen aromatischen sowie an (teil-)fluorierte aliphatische Gruppen gebundenen Hydroxygruppen wiederum in Cyanatgruppen umwandeln. Da aromatische Cyanatverbindungen unter Temperatureinwirkung cyclotrimerisieren sowie mit aromatischen Hydroxyverbindungen reagieren können, die z.B. bei einer nicht ganz vollständigen Umsetzung mit Bromcyan verblieben sein können, entsteht dabei ein Netzwerk, das neue Triazinringe aufweist. Dies ist im Reaktionsschema 7 beispielhaft dargestellt. Werden der Reaktionsmischung weitere (mono-, di- oder höherfunktionelle) Cyanate oder Phenole oder weitere Coreaktanden oder Harze mit einer Vielzahl von solchen Gruppen zugesetzt, entsteht ein Copolymerisat mit Vernetzungsstrukturen, die durch Reaktionen von OCN- mit OCN-, OH- und/oder weiteren funktionellen Gruppenentstanden sind.

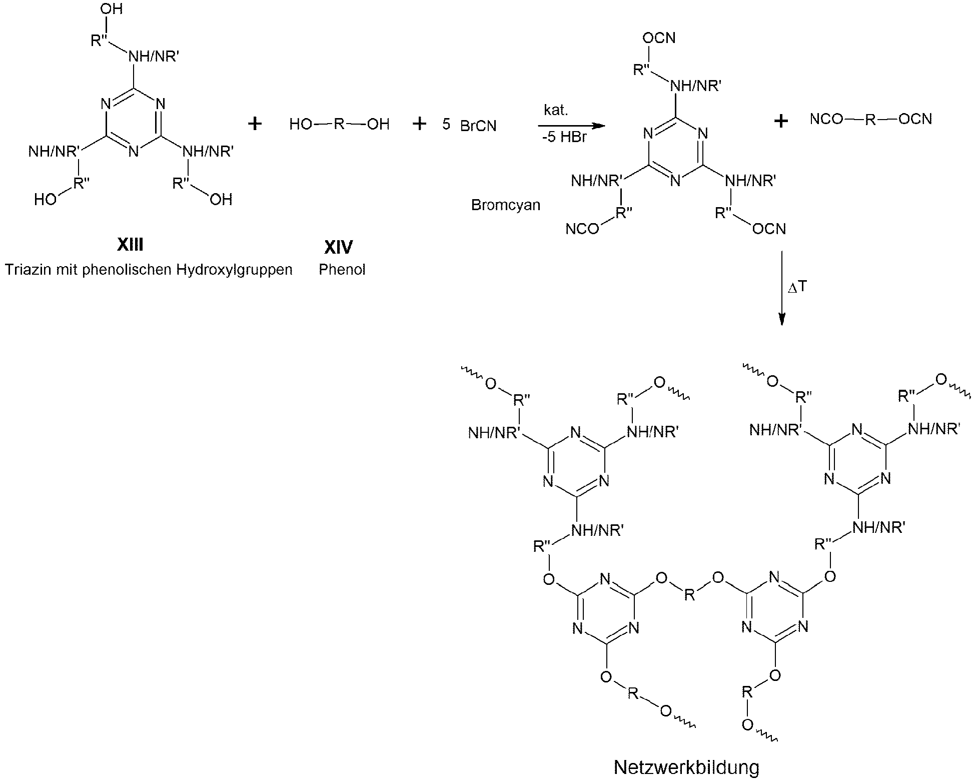

In einer zweiten Ausführungsform der Erfindung wird die Aminolyse mit Aminen durchgeführt, die keine Hydroxylfunktion aufweisen, also mit Aminen der Formeln (1) und (2), worin X = H bedeutet. Es entstehen als Hauptprodukte dann neben den Phenolen bzw. Fluoralkoholen Triazin-Derivate ohne reaktive Gruppen (Struktur XV). Auch diese Mischungen können für die Herstellung der oben genannten Polymere eingesetzt werden. In diesen Fällen werden nur die Phenole (bei Verwendung von aromatischen Cyanatharzen als Ausgangsmaterial), bzw. nur die Fluoralkohole (bei Verwendung von teilfluorierten Polycyanuraten) in das jeweilige Netzwerk eingebaut, während die Triazin-Derivate als (brandhemmender) Füllstoff wirken (Struktur XV). Dabei lassen sich gemäß Variante (a) mit di- oder höherfunktionellen Isocyanaten Polyurethane herstellen. In dieser Variante sollten vorzugsweise mindestens trifunktionelle Isocyanate verwendet werden, um eine Vernetzung zu gewährleisten, sofern das aminolysierte Produkt nicht weitere Komponenten enthält, die dies garantieren, wie zum Beispiel die Abbauprodukte höherfunktioneller Polycyanurate. Auch die Umsetzung mit Epichlorhydrin mit anschließender Vernetzung mit einem Amin gemäß Variante (b) ist möglich, wobei für eine Vernetzung ein Diamin eingesetzt werden muss. Es können aber auch di- oder höherfunktionelle Carbonsäuren bzw. deren Derivate verwendet werden (Variante c), um zu ungesättigten oder gesättigten Polyestern zu gelangen, je nachdem, ob gesättigte oder ungesättigte Carbonsäuren bzw. deren Derivate eingesetzt werden. Ungesättigte Polyester können dann weiter mit Styrol vernetzt werden. Gleichfalls gelingt die Umsetzung mit α,β-ungesättigten aktivierten Carbonsäuren oder Derivaten, worauf die Mischung durch radikalische Polymerisation der vorhandenen ungesättigten C=C-Doppelbindungen ausgehärtet wird (Variante d). Unter der Bedingung, dass das eingesetzte aminolysierte Produkt aromatische Cyanat-Komponenten aufweist, ist durch Umsetzung mit Aldehyden auch die Bildung von Phenolharzen möglich (Variante e). Und mit Bromcyan entstehen di- oder höherfunktionelle Cyanate, die ihrerseits entweder als solche ein Cyanurat-Netzwerk oder unter Einbeziehung di- oder mehrfunktioneller Cyanate, Phenole und/ oder weiterer Coreaktanden Copolymerisate bilden können. (Variante f).

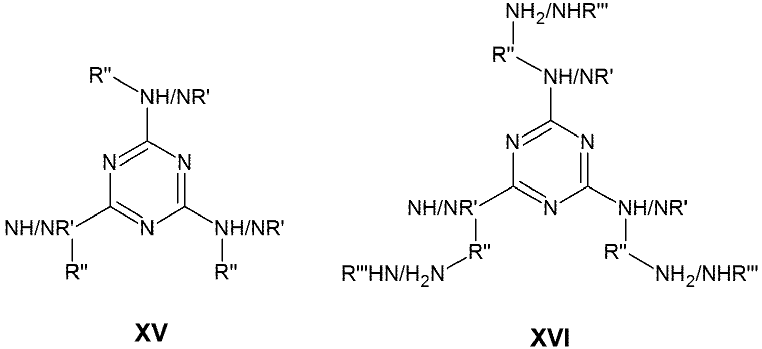

In einer dritten Ausführungsform, bei der Diamine als Aminolyse-Reagens eingesetzt werden, entstehen Triazine der Struktur XVI sowie Phenole bzw. Fluoralkohole. Es lassen sich dabei analog zu den obigen Reaktionen durch Umsetzung der Amin- und Alkoholgruppen mit Isocyanaten Polyurethan-Polyharnstoffcopolymere erzeugen, die in dieser Variante (Variante a) auch Harnstoffgruppen aufgrund der Reaktion der Isocyanate mit den vorhandenen endständigen Aminogruppen aufweisen.

Die Abbauprodukte der dritten Ausführungsform können weiterhin direkt mit epoxidgruppenhaltigen Monomeren, Oligomeren oder Polymeren zu neuen Polymeren umgesetzt werden, da Epoxide mit den dann aminogruppenhaltigen Triazinen der Struktur XVI vernetzen können und als Nebenreaktion auch die entstandenen Phenole und/oder Fluoralkohole der Struktur XIV in das Netzwerk einbauen können, wie im nachstehenden Reaktionsschema 8 gezeigt (Variante b).

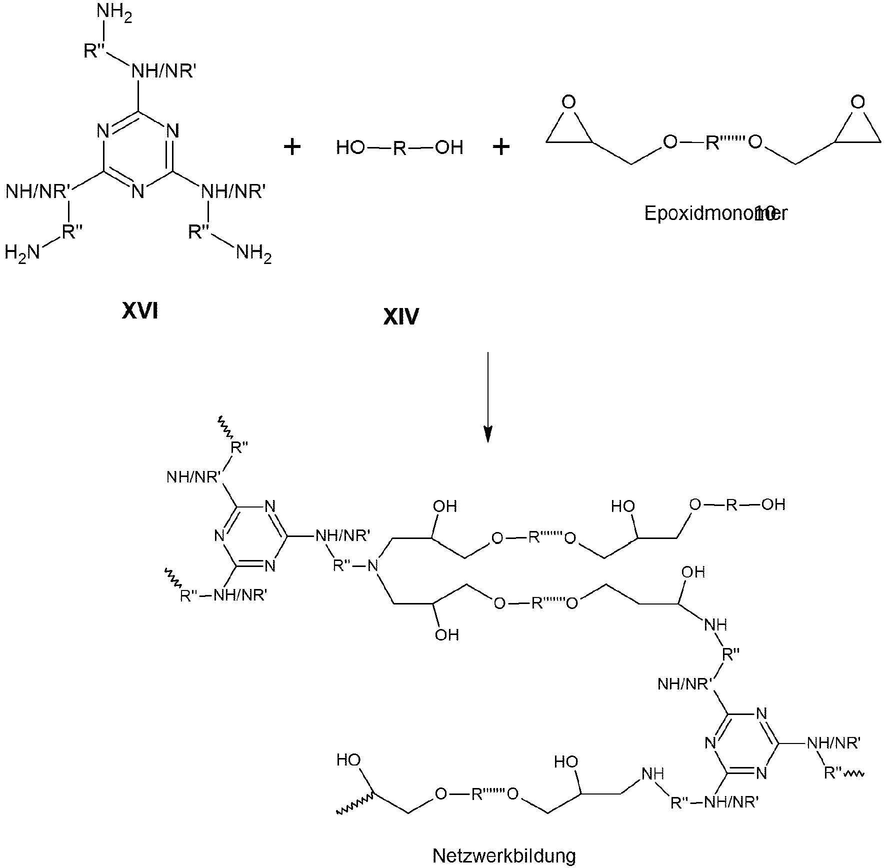

Die Umsetzung mit einer gesättigten oder ungesättigten di- oder höherfunktionellen Carbonsäure (ggf. in Kombination mit einer entsprechenden Monocarbonsäure) (Variante c; Durchführung analog zur Variante c der ersten und zweiten Ausführungsform) führt bei dieser Ausführungsform der Erfindung zu einem Polyamid-Polyestercopolymer, da auch die dann vorhandenen Aminogruppen mit der Carbonsäure oder dem Carbonsäurederivat unter Ausbildung einer Amidgruppe reagieren. Ungesättigte Polyamid-Polyestercopolymere können dann weiter mit Styrol vernetzt werden.

Gleichfalls kann die Umsetzung mit α,β-ungesättigten aktivierten Carbonsäuren oder Derivaten durchgeführt werden, worauf die Mischung durch radikalische Polymerisation der dann eingeführten ungesättigten C=C-Doppelbindungen ausgehärtet wird (Variante d).

Wenn anstelle eines Diamins allerdings ein Ammoniak als aminolysierendes Ausgangsmaterial eingesetzt wird (vierte Ausführungsform der Erfindung), entsteht neben Phenolen und/oder Fluoralkoholen Melamin (Struktur XVII).

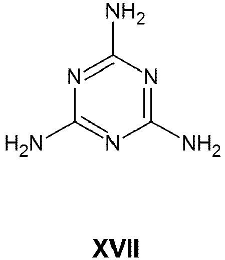

Das Produktgemisch der Aminolyse mit Ammoniak eignet sich für die Herstellung von Polyharnstoff-Polyurethancopolymeren durch Reaktion der Amin- und Hydroxylgruppen mit Isocyanaten (Variante a; vergleichbar der Variante a der dritten Ausführungsform). Die Umsetzung mit Epoxiden (Variante b) verläuft analog zu der Variante b der dritten Ausführungsform; diesbezüglich kann auf das obige Reaktionsschema 8 verwiesen werden. Die Umsetzungen mit einer gesättigten oder ungesättigten Dicarbonsäure bzw. einem solchen Carbonsäurederivat (Variante c; analog zur Variante c der dritten Ausführungsform) führt analog der dritten Ausführungsform auch hier zu einem Polyamid-Polyestercopolymer. Die Umsetzung mit einer α,β-ungesättigten aktivierten Carbonsäure oder einem Derivat davon (Variante d) führt wiederum zu einem Harz, das radikalisch aufgrund der dann eingeführten C=C Bindung ausgehärtet werden kann; diese Umsetzung ist vergleichbar der Variante d der dritten Ausführungsform.

Des Weiteren ist es möglich, dann, wenn die dem Abbau zugrundeliegenden Cyanatharze aromatische Cyanatharz-Strukturen aufweisen, mit der Aminolyse mit Hilfe von Ammoniak zu Melamin-Phenol-Formaldehyd-Copolymeren zu gelangen, und zwar durch Umsetzung mit einem Aldehyd, vorzugsweise Formaldehyd (Variante e). Diese Umsetzung ist in im Reaktionsschema 9 allgemein dargestellt:

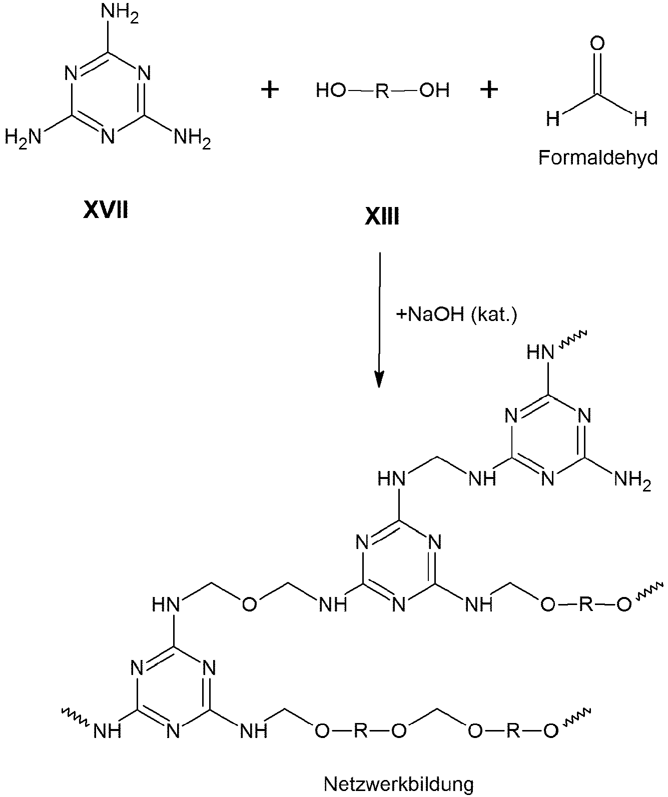

Weisen die dem Abbau zugrundeliegenden Cyanatharze eine aliphatische teilfluorierte Cyanatharz-Struktur auf, so lassen sich mit Formaldehyd Melaminharze herstellen. Hierbei wirken die dann bei der Aminolyse mit Ammoniak entstandenen Fluoralkohole als Weichmacher und verhindern eine Rissbildung des Materials bei der Aushärtung; außerdem beugen sie einer Versprödung während der Nutzungszeit vor.

In einer fünften Ausführungsform der Erfindung wird für die Alkoholyse ein Alkoholysereagens der Formel (3) eingesetzt.

In dieser Ausführungsform der Erfindung fallen ausschließlich Produkte an, die Hydroxygruppen tragen (siehe die nachfolgenden Strukturen XVIII und XIX). Bei der Alkoholyse wird der Cyanurat-Ring nicht zerstört; die Ethergruppen an den Ring-Kohlenstoffatomen werden alkoholysiert, d.h. es entstehen bei Verwendung von Aminoalkoholen drei Gruppierungen R'''-O- am Ring. Da Cyanurate meist unter Verwendung von aromatischen Cyanaten hergestellt wurden, entstehen in all diesen Fällen weiterhin Phenol-Verbindungen. Das Verfahren lässt sich jedoch auch mit aliphatischen teilfluorierten Polycyanuraten durchführen, wobei dann anstelle der Phenole Fluoralkohole entstehen. Wenn das Polycyanurat z.B. aus oder unter Verwendung von Bisphenol-A-Dicyanat hergestellt wurde, fällt bei der Aminolyse Bisphenol A an. Das Produktgemisch der Aminolyse kann daher sowohl Hydroxyverbindungen mit kettenverlängernden Eigenschaften (Struktur XIX) enthalten, enthält aber immer auch Hydroxyverbindungen (Struktur XVIII), die zur Vernetzung des späteren Kunststoffs beitragen können.

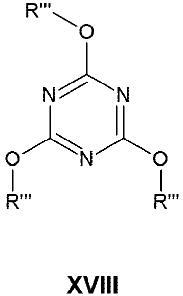

HO-R-OH **XIX**

Das Alkoholyse-Produkt kann in dieser Ausführungsform mit einer Vielzahl von Monomeren oder Prepolymeren kombiniert werden, die vorzugsweise mit di- bzw. höherfunktionellen Alkoholen/Phenolen unter Ausbildung eines Netzwerkes reagieren können.

Hier sind an vorderster Stelle Isocyanate zu nennen, mit denen sich Polyurethane erhalten lassen (Variante a).

Gegebenenfalls können neben Di- oder Polyisocyanaten weiterhin hydroxygruppenhaltige Kettenverlängerungsmittel wie 1,4-Butandiol oder hydroxygruppenhaltige Vernetzer wie Glycerin zugegeben werden. Mit Wasser als Treibmittel lassen sich auch Schäume erhalten.

Unter Anwendung der Epoxidierung mittels Epichlorhydrin werden epoxidgruppenhaltige Komponenten erhalten, die dann z. B. mit Aminen oder Anhydriden ausgehärtet werden können (Variante b).

Es können aber auch di- oder höherfunktionelle Carbonsäuren bzw. deren Derivate verwendet werden (Variante c), um zu ungesättigten oder gesättigten Polyester zu kommen, je nachdem, ob gesättigte oder ungesättigte Carbonsäuren bzw. Carbonsäurederivate eingesetzt werden. Ungesättigte Polyester können dann weiter mit Styrol vernetzt werden. Da das Cyanurat-Abbauprodukt meist mindestens drei Hydroxygruppen aufweist, ist eine Vernetzung aber auch ohne Styrol gewährleistet.

Mittels einer weiteren Variante (Variante d) lassen sich Polymere erhalten, die über die darin vorhandenen C=C-Doppelbindungen radikalisch vernetzt werden können, und Polyacrylate oder Polyperfluorcyclobutanpolymere (PFCB-Polymere) bilden. Hierfür werden α,β-ungesättigten aktivierten Carbonsäuren oder Derivaten wie die entsprechenden Chloride oder Anhydride, beispielsweise Acrylsäure-, Methacrylsäure- oder Trifluorovinyloxy-benzoylsäurederivate mit den Abbauprodukten der Aminolyse umgesetzt. Die Härtung erfolgt anschließend radikalisch z.B. direkt thermisch wie bei den PFCB-Polymeren oder nach eventueller Zugabe eines Radikalinitiators thermisch oder UV-initiiert, alternativ beispielsweise auch ohne Initiator mittels Elektronenstrahlhärtung. Bei dieser Variante können die Hydroxylgruppen der Alkoholyse-Abbauprodukte z.B. mit den Carbonsäurechlorid-Gruppen reagieren.

Unter Nutzung dieser Ausführungsform der Erfindung lassen sich in einer weiteren Variante (Variante e) Phenolharze (bei Verwendung von aromatischen Cyanatharzen) erzeugen. Hierbei wirken die Triazinringe mit den endständigen aliphatischen unsubstituierten Alkylgruppen als Flammfestmacher oder die mit OH substituierten teilfluorierten Alkylgruppen als Weichmacher. Hierfür werden die Abbauprodukte mit einem Aldehyd, vorzugsweise Formaldehyd, umgesetzt.

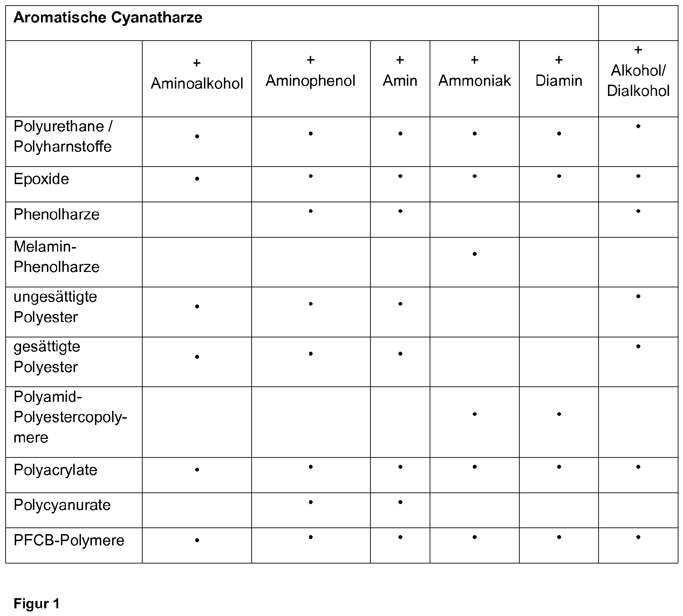

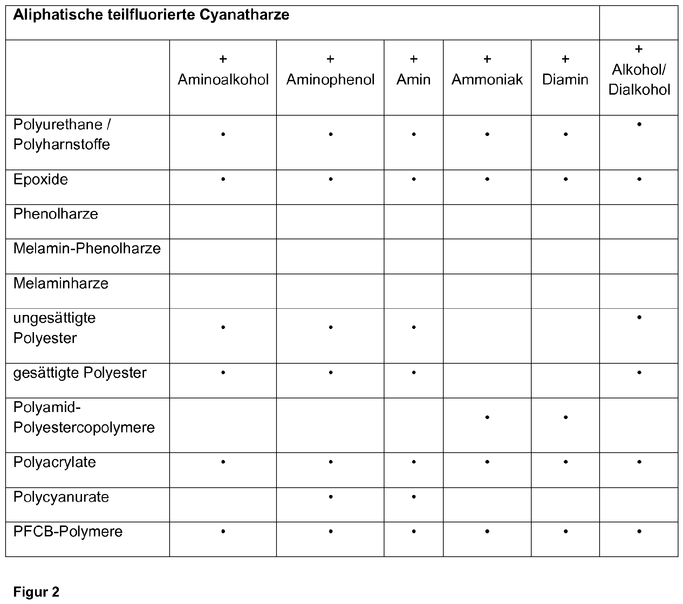

In den beigefügten Figuren 1 und 2 ist schematisch dargestellt, welche Polymere ausgehend von welchem Polycyanurat erhältlich sind, soweit für die Aminolyse ein (aliphatischer) Aminoalkohol, ein Aminophenol, eine Aminverbindung ohne weitere Hydroxyl- oder Aminogruppe, ein Diamin oder Ammoniak oder ein mono-, di-, oder höherfuntioneller Alkohol eingesetzt wird, wie es die Erfindung vorschlägt.

Dementsprechend betrifft die vorliegende Erfindung ein Verfahren zur Wiederverwertung von bereits recycelten, d.h. einer Aminolyse und/oder Alkoholyse unterworfenen polycyanurathaltigen Materialien, bei dem das Produkt der Aminolyse und/oder Alkoholyse, hier nachstehend auch als Recyclat bezeichnet, unmittelbar nach dem Abtrennen des Aminolyse- oder Alkoholysereagens ohne weitere Aufarbeitungsschritte zur Herstellung neuer Materialien verwendet werden kann.

Die Erfindung betrifft weiterhin das genannte Verfahren, zusätzlich umfassend das Recyclieren des polycyanurathaltigen Materials. Hierfür wird dieses in einem ersten Schritt der oben beschriebenen Aminolyse und/oder Alkoholyse unterworfen, um zu den gewünschten Zersetzungsprodukten zu gelangen. Dies gelingt überraschenderweise nicht nur mit einem wenigstens eine reaktive NH₂-Gruppe enthaltenden Aminagens, wie aus DE 44 32 965 C1 bekannt. Die Erfinder haben nämlich festgestellt, dass die Aminolyse auch mit sekundären Aminen möglich ist, wie aus der untenstehenden Tabelle 1 ersichtlich, so dass auch die oben genannten Amine mit einer Aminogruppe R'NH eingesetzt werden können. Des Weiteren haben die Erfinder völlig überraschend festgestellt, dass das Zerlegen der Polycyanurate in neue Grundbausteine für neue Polymere auch mit Mono-, di- oder höherfunktionellen Hydroxylverbindungen durchführbar ist, wie aus Tabelle 1 zu entnehmen. Dies ist aufgrund der geringen Toxizität vieler Alkohole, wie z.B. Ethylenglycol ein großer Vorteil. Auch die Reaktionszeiten der Alkoholyse mit bestimmten hochsiedenden Hydroxylverbindungen sind mit denen der Aminolyse überraschenderweise vergleichbar schnell. In einem zweiten Schritt wird durch Entfernen des Agens, z.B. durch dessen Abdestillieren im Vakuum, das wiederverwertbare Recyclat erhalten. In einem dritten Schritt, der unmittelbar, d.h. ohne weitere Aufarbeitungsschritte auf den zweiten Schritt folgt, wird dieses dann als Ausgangsstoff für neue polymere Materialien verwendet.

Die durch die Aminolyse und/oder Alkoholyse erhältlichen Recyclate zeichnen sich vor allem durch ihre einfache Gewinnung aus. Des Weiteren ist ihr einfaches Zusammenmischen mit weiteren Komponenten bekannter Polymersysteme, z.B. zur Herstellung von Polyadditions- oder Polykondensationspolymerisaten, in verschiedenen Anteilen bemerkenswert. Dabei können sie jeweils eine oder mehrere Komponente(n), z.B. eine Hydroxyl- oder eine Aminkomponente, ersetzen oder ergänzen. Häufig kann unter Verzicht auf Lösungsmittel gearbeitet werden. Ferner können auch Schäume mit einer überraschenderweise sehr homogenen Zellstruktur hergestellt werden. Hier kann beispielsweise Wasser (gängig z.B. für die Herstellung von Polyurethanschäumen) oder ein Peroxid als chemisches oder Pentan als physikalisches Treibmittel eingesetzt werden. Zudem lassen sich die Recyclate auch in Verbindung mit nachwachsenden Rohstoffen verarbeiten, was aufgrund des zunehmenden Rohstoffmangels interessant erscheint.

Wie oben dargestellt, können die Produkte der Aminolyse oder Alkoholyse in allen fünf Ausführungsformen der Erfindung mit Isocyanaten zu Polyurethan oder Polyharnstoff-Polyurethancopolymeren verarbeitet werden, indem sie mit einem di- oder höherfunktionellen Isocyanat umgesetzt werden (Varianten a). Gegebenenfalls können die Eigenschaften des gewünschten Produkts noch dadurch modifiziert werden, dass weitere Alkohole zugegeben werden. Dies kann unter dem Aspekt geschehen, die Mischung der Ausgangsmaterialien in eine flüssige Form zu bringen, oder aber um das Netzwerk des Produkts in geeigneter Weise zu modifizieren, z.B. durch die Zugabe eines Bisalkohols als Kettenverlängerer und/oder eines tris- oder höherwertigen Alkohols als Vernetzer. Gut geeignet ist der Zusatz eines flüssigen Diols wie Ethylenglycol, Propylenglycol oder 1,4-Butandiol, weil diese Diole einerseits als Lösungsmittel für das Aminolyseprodukt und andererseits als Kettenverlängerer dienen können. Ähnliches gilt für den Zusatz eines höherwertigen Alkohols wie Glycerin. Bei Bedarf kann auch ein Monoalkohol oder Monophenol zugesetzt werden. Dieser reduziert die Netzwerkdichte und führt so zu einer Auflockerung des Netzwerkes. Die Mengenanteile werden jeweils in günstiger, dem Fachmann bekannter Weise so gewählt, dass das Endeigenschaftsprofil den jeweiligen Anforderungen entspricht.

Hierbei kann z.B. bei erhöhten Ansprüchen an die Flammfestigkeit das Isocyanat so im Überschuss eingesetzt werden, dass sich die als flammhemmend bekannten Isocyanuratgruppen ausbilden.

Ebenfalls in allen fünf Ausführungsformen der Erfindung (Varianten b) können die Produkte der Aminolyse zu einem Epoxidpolymer verarbeitet werden, indem sie mit im Falle der Aminolyse mit Aminoalkoholen und/oder-phenolen und/oder Monoaminen (erste und zweite Ausführungsform, Variante b) oder im Falle der Alkoholyse mit Epichlorhydrin umgesetzt werden und dann mit Aminen oder Anhydriden ausgehärtet werden, so dass sich ein polymeres Netzwerk ausbildet, oder im Falle der Aminolyse mit Diaminen oder Ammoniak (dritte und vierte Ausführungsform, Variante b) mit einem di- oder höherfunktionellen epoxidgruppenhaltigen Monomer, Oligomer oder Polymer direkt umgesetzt werden. Gegebenenfalls können die Eigenschaften des gewünschten Produktes im Vorhinein dadurch eingestellt werden, dass nicht alle mit Hilfe der Aminogruppen trennbaren Bindungen des zu recyclierenden Materials durch das verwendete Amin geöffnet werden (siehe hierzu das erste Reaktionsschema oben). So lässt sich unter anderem die Glasübergangstemperatur variieren. Diese kann auch durch das Verhältnis der beiden Reaktionskomponenten signifikant beeinflusst werden. Im Übrigen erfolgt die Umsetzung des Aminolyseprodukts, das bei Raumtemperatur häufig fest ist, vorzugsweise ohne Zugabe eines Lösungsmittels, indem das Recyclat aufgeschmolzen und bei höherer Temperatur mit dem Epoxid umgesetzt wird. Man unterwirft die Mischung knapp oberhalb der Temperatur der Schmelze des Gemischs einer milden Vorvernetzung, z.B. für mehrere Stunden, und härtet sie sodann durch Anhebung der Temperatur auf ca. 100-150°C vollständig aus.

Auch sind alle fünf Ausführungsformen der Erfindung in Form der Varianten c ausführbar. Hier werden di- oder höherfunktionelle Carbonsäuren bzw. deren Derivate verwendet, um zu ungesättigten oder gesättigten Polyestern oder Polyamid-Polyestercopolymeren zu kommen, je nachdem, ob gesättigte oder ungesättigte Carbonsäuren bzw. Carbonsäurederivate eingesetzt werden. Ungesättigte Polyester können dann weiter mit Styrol vernetzt werden. Die Umsetzung der Abbauprodukte wird vorzugsweise in der Schmelze durchgeführt, wobei das bei der Kondensation entstehende Wasser abdestilliert wird. Ebenso kann die Reaktion in Alkoholen und/oder Aminen, die als Lösungsmittel für das hochviskose Recyclat dienen und dann ebenfalls mit der Carbonsäure bzw. dem Carbonsäurederivat umgesetzt werden, durchgeführt werden. Bei dieser Variante kann das Verhältnis zwischen Polyester und Polyamid im Copolymer beeinflusst werden.

Weiterhin sind alle fünf Ausführungsformen der Erfindung in Form der Varianten d ausführbar. Dabei wird das Recyclat mit einem meist monofunktionellen α,β-ungesättigten, aktivierten Carbonsäurederivat umgesetzt und dann über ihre enthaltenen Doppelbindungen vernetzt. Die Umsetzung mit der Carbonsäure erfolgt in der Regel aminkatalysiert und häufig in einem Lösungsmittel wie Chloroform oder Tetrahydrofuran. Die Gegenwart von Wasser wird tunlichst vermieden, um die Bildung von nicht aktivierten Carbonsäuregruppen zu vermeiden. Die Aushärtung erfolgt dann radikalisch durch die C=C-Bindungen, ggf. nach Zugabe eines Initiators thermisch oder mittels UV-Licht, oder wahlweise mittels Elektronenstrahlhärtung. Die Eigenschaften des Produktes können durch die Auswahl des Substituenten an der aktivierten Carbonsäure der die Doppelbindung enthält wunschgemäß beeinflusst werden. Verwendet man z.B. Trifluorovinyl-benzoylchlorid zur Umsetzung mit den Abbauprodukten und härtet das entstehende Produkt anschließend thermisch in einer radikalischen 1-2-Cycloaddition aus, so erhält man Polymere mit besonders hohen Glasübergangstemperaturen.

In den Ausführungsformen 1, 2, 4 und 5 der Erfindung, in denen Aminoalkohole und/oder -phenole oder Monoamine oder Ammoniak als Aminolysereagens oder ein Alkohol als Alkoholysereagens zum Einsatz kommen, lassen sich die entstandenen Abbauprodukte mit Aldehyden, meist Formaldehyd zu Phenolharzen oder Melamin-Phenolharzen oder Melaminharzen umsetzen (Variante e). Die Herstellung zu Phenolharzen kann prinzipiell auf zwei unterschiedlichen Wegen durchgeführt werden: Bei der säurekatalysierten Herstellung entstehen sogenannte Novolake; diese können dann mit Urotropin (Hexamethylentetramin) umgesetzt und vernetzt werden. Bei der basenkatalysierten Herstellung wird zunächst das Phenolat durch die Reaktion mit der in katalytischen Mengen eingesetzten Natronlauge gebildet. Danach findet die Addition des Formaldehyds in ortho- oder para-Stellung des Aromaten statt. Aufgrund dessen kann das Polymer somit ohne zusätzlichen Vernetzer ein polymeres Netzwerk bilden. Diese Art der Phenolharze werden Resole genannt.

In den Ausführungsformen 1 und 2 der Erfindung, in denen Aminoalkohole und/oder-phenole oder Monoamine als Aminolysereagens zum Einsatz kommen, lassen sich aus den entstandenen Abbauprodukten erneut Polycyanurate herstellen (Variante f). Hierbei werden die entstandenen Abbauprodukte in beispielsweise Chloroform gelöst und aminkatalysiert mit BrCN umgesetzt. Die hierbei eingeführten Cyanatgruppen können dann thermisch in einer Tricyclotrimersierungsreaktion erneut zu Polycyanuraten vernetzt werden. Werden der Reaktionsmischung weitere (mono-, di- oder höherfunktionelle) Cyanate oder Phenole oder Coreaktanden oder Harze mit einer Vielzahl von solchen Gruppen zugesetzt, entsteht ein Copolymerisat mit Vernetzungsstrukturen, die durch Reaktionen von OCN- mit OCN-, OH- und/oder weiteren funktionellen Gruppen entstanden sind.

Die Erfindung soll nachstehend anhand von Beispielen näher erläutert werden.
I. Untersuchung des chemischen Recyclings von Cyanuraten und der bei der Zersetzung entstehenden Abbauprodukte in verschiedenen Recyclingagenzien.

Die in der untenstehenden Tabelle 1 aufgeführten Versuche A bis K wurden jeweils wie folgt durchgeführt: Ein ca. 5 g schweres, bei 250°C ausgehärtetes Probenstück aus DCBA (Dicyanatobisphenol A) mit den Dimensionen 30mm x 20mm x 6mm wurde in einem 50ml Rundkolben mit Kühlaufsatz in die vierfache Menge Recyclingagens wie in der dritten Spalte der Tabelle 1 aufgeführt gegeben und bis zur in der Tabelle genannten Temperatur *T*_{Recycling} aufgeheizt. Die Zeit *t*_{Recycling} bei dieser Temperatur bis zur vollständigen Zersetzung wurde dann notiert, und in der Regel wurde das überschüssige Reagens unter Vakuum abrotiert.

**Tabelle 1**

| **Bsp.** | **Polycyanurattyp** | **Agens** | **Agenstyp** | ***T***_{Recycling} **[°C]** | ***T*_{Sdp.} [°C]** | ***t*_{Recycling} [h]** | **Nachweis** |
|---|---|---|---|---|---|---|---|
| A | DCBA | Octylamin | aliphatisches prim. Amin | 180 | 180 | 11 | GPC nach Abrotieren |
| B | DCBA | Hexylamin | aliphatisches prim. Amin | 131 | 131 | 36 | GPC nach Abrotieren |
| C | DCBA | Butylamin | aliphatisches prim. Amin | 78 | 78 | 138 | GPC nach Abrotieren |
| D | DCBA | Dibutylamin | sek. aliphatisches Amin | 161 | 161 | 511 | GPC nach Abrotieren |
| E | DCBA | Hexan-1,6-diamin | prim. aliphatisches Diamin | 204 | 204 | 1,5 | Visuell |
| F | DCBA | Ethan-1,2-diamin | prim. aliphatisches Diamin | 116 | 116 | 2,5 | GPC nach Abrotieren |
| G | DCBA | Aminoethanol | prim. aliphatischer Aminoalkohol | 172 | 172 | 1 | GPC nach Abrotieren |
| H | DCBA | 3-Amino-1-propanol | prim. aliphatischer Aminoalkohol | 185 | 185 | 2 | GPC nach Abrotieren |
| I | DCBA | Isopropanol -amin | prim. aliphatischer Aminoalkohol | 159 | 159 | 3 | GPC nach Abrotieren |
| J | DCBA | Methylethanolamin | sek. aliphatischer Aminoalkohol | 158 | 158 | 3,5 | GPC nach Abrotieren |
| K | DCBA | Diethanolamin | sek. aliphatischer Aminoalkohol | 195 | 269 | 8 | Visuell |
| L | DCBA | 2-Methyl-1-butanol | Alkohol | 129 | 129 | 3000 | GPC |
| M | DCBA | Octanol | Alkohol | 195 | 195 | <48 | Visuell |
| N | DCBA | Ethylenglycol | Dialkohol | 197 | 197 | <24 | Visuell |

Man erkennt eine starke Beschleunigung der Zersetzungsreaktionen bei Verwendung primärer Amine (E, F, G, H) und sekundärer Amine (J, K), die eine zusätzliche OH- oder NH₂/NHR'"-Gruppe tragen.

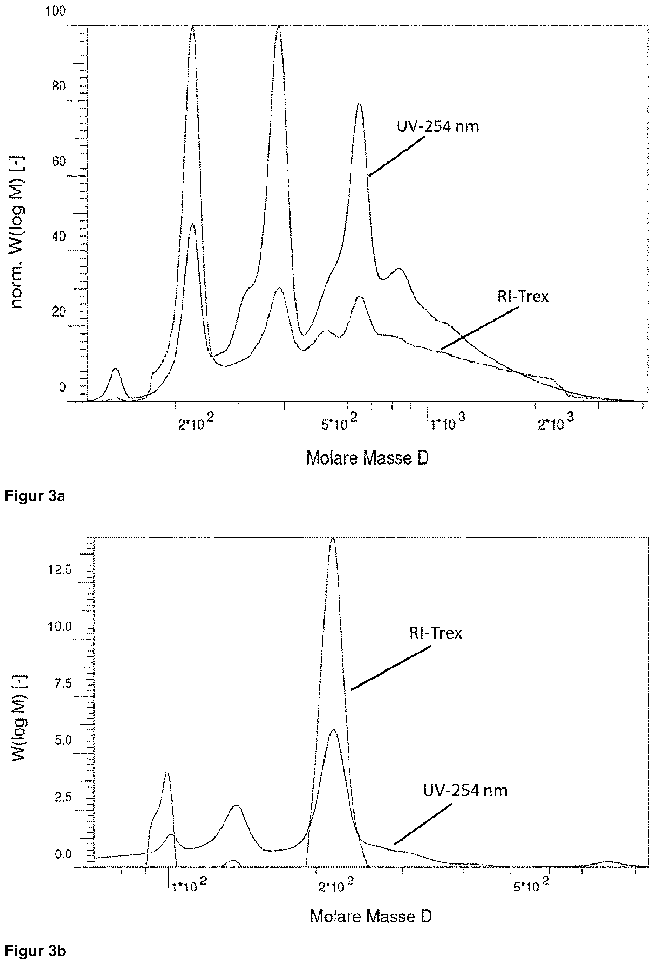

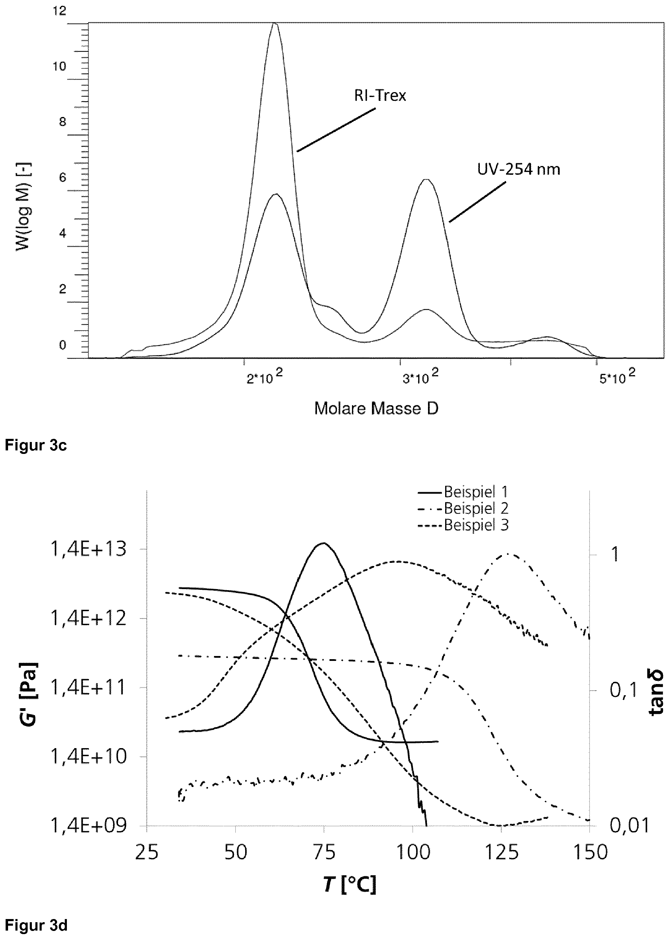

Die Molmassenverteilung der Zersetzungsprodukte der Versuche A, E und G wurde mittels GPC bestimmt, siehe Figuren 3a bis 3c. Daraus lässt sich ersehen, dass der Abbau von DCBA mit dem primären aliphatischen Octylamin (Versuch A) zu einem Produktgemisch mit Molmassen von bis zu 4 x 10³ führt, während er mit Ethandiamin (Versuch F) ein Produktgemisch mit Molmassen von bis zu 9 x 10² und mit Aminoethanol (Versuch G) von bis zu 5 x 10² ergibt. Dies zeigt, dass das Vorhandensein einer zweiten funktionellen Gruppe im verwendeten Amin nicht nur die Zersetzung beschleunigt, sondern auch zu Produkten mit geringeren Molmassen führt.

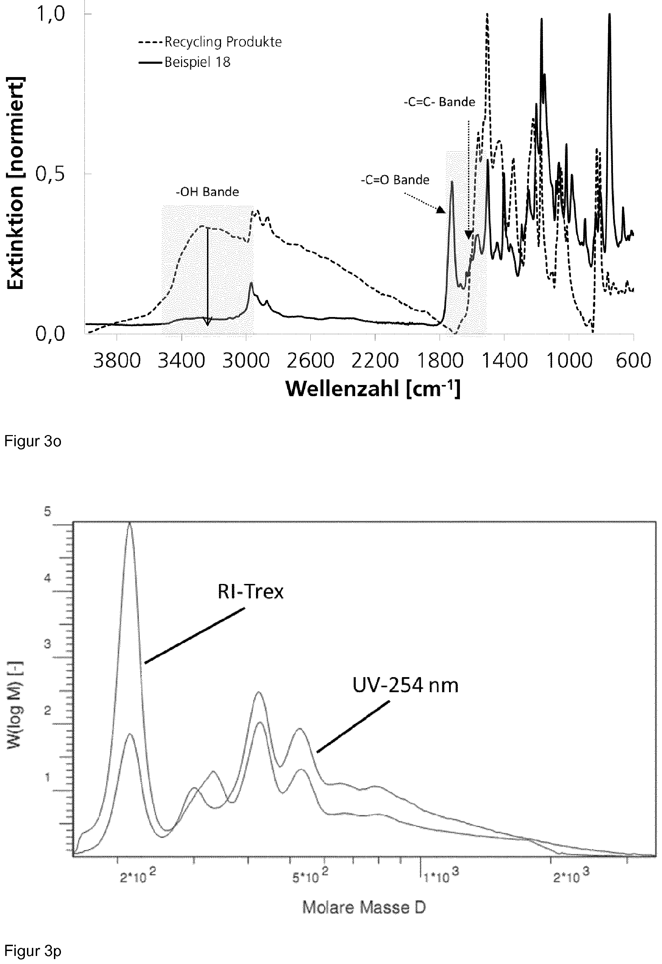

Auch die Molmassenverteilung der Zersetzungsprodukte des Versuchs L wurde mittels GPC bestimmt, siehe Figur 3p. Daraus lässt sich ersehen, dass der Abbau von DCBA mit dem sekundären aliphatischen Alkohol (Versuch L) zu einem Produktgemisch mit Molmassen von bis zu 3 x 10³ führt.

Die beiden Kurven in den drei Diagrammen geben die jeweiligen Messsignale des Brechungsindex- (Rl-Trex) und des UV- (UV-254nm) Detektors an.

### Messmethoden:

### Hydroxylzahlbestimmung:

Die Hydroxylzahl wurde in Anlehnung an die DIN 53240-2 2007 bestimmt.

### Aminzahlbestimmung:

Die Aminzahl wurde in Anlehnung an die DIN 1877-2 bestimmt.

### Dynamisch mechanische Analyse (DMA):

Die dynamisch-mechanische Analyse unterwirft die zu untersuchende Probe in Abhängigkeit von der Temperatur einer sich zeitlich ändernden sinusförmigen mechanischen Beanspruchung. Dadurch verformt sich die Probe mit gleicher Periode. Als Ergebnis liefert die dynamisch-mechanische Analyse den komplexen Modul der Probe. Voraussetzung dafür ist, dass die Probe in keinem Fall außerhalb des linearelastischen Bereiches (Hookescher Bereich) belastet wird. Die Ableitung des komplexen Moduls liefert den tan*δ*. Das Maximum des tan*δ* ist als Glasübergangstemperatur festgelegt. Oberhalb der Glasübergangstemperatur befindet sich der Gebrauchsbereich von engmaschig vernetzten Polymeren, sog. Duromeren.

Verwendet wurde ein ARES Messgerät der Fa. Rheometric Scientific, mit dem der Torsionsmodul *G'*, sowie der tan*δ* der Probe gemessen wurde. Die Proben (50x3x6mm³) wurden hierbei von ca. 30°C auf 100°C respektive 200°C mit einer Heizrate von 4K·min⁻¹ aufgeheizt. Die Torsionsfrequenz betrug 1Hz.

### Shore Härte A Messung:

Bei geringeren Ansprüchen an die Genauigkeit kann die Härte von Kunststoffen mittels Shore A Härte-Handmessgeräten ermittelt werden. Die Härte ist definiert als der Widerstand eines Körpers gegen das Eindringen eines härteren Körpers bestimmter Form. Die Härteprüfung von elastomeren Kunststoffen nach Shore beschreibt die DIN 53505. In Anlehnung an diese Norm wurden auch die Messungen an den erstellten Prüfkörpern durchgeführt.

### Dichtebestimmung mittels hydrostatischer Waage:

Unter Verwendung einer hydrostatischen Waage wurde die Dichte verschiedener Schaumprobekörper durch Anwendung des "Archimedischen Prinzips" bestimmt. Dieses besagt, dass ein in Flüssigkeit getauchter Körper eine Auftriebskraft erfährt, die der Gewichtskraft der Flüssigkeit entspricht, welche durch das Volumen des eingetauchten Körpers verdrängt wird. Eine hydrostatische Waage ermöglicht es nun, sowohl die Masse des Körpers in Luft, als auch die Masse des Körpers in einer Flüssigkeit, deren Dichte bekannt ist, zu bestimmen und somit die gesuchte Dichte des Festkörpers zu ermitteln.

### Thermogravimetrische Analyse (TGA):

Die thermogravimetrische Analyse (TGA) ist eine Methode, bei der die Masseänderung einer Probe in Abhängigkeit von der Temperatur und Zeit gemessen wird. Hierdurch lassen sich unter anderem Zersetzungstemperaturen bestimmen.

Bei den folgend aufgeführten Beispielen wurde ein Gerät der Fa. Mettler Toledo mit der Bezeichnung TGA/SDTA851 verwendet. Die Proben wurden von 25°C bis zu einer Temperatur von 600°C mit einer Heizrate von 10K·min⁻¹ aufgeheizt und die Masseänderung in Abhängigkeit der Temperatur aufgezeichnet.

### Differentialkalorimetrie (DSC):

Die dynamische Differenzkalorimetrie ist ein Verfahren der thermischen Analyse zur Messung von abgegebener oder aufgenommener Wärmemenge einer Probe bei Aufheizung, Abkühlung oder einem isothermen Prozess. Somit können mittels DSC unter anderem Schmelzpunkte oder -bereiche oder Vernetzungsreaktionen anhand Ihrer Exo- oder Endothermie gemessen werden.

Bei den hier dargestellten Beispielen wurde ein Messgerät der Fa. Mettler Toledo mit der Bezeichnung DSC 821 verwendet.

Hierbei wurden die Proben mit einer Heizrate von 10K·min⁻¹ von 25°C auf 300°C aufgeheizt. Im Falle der Perfluorcyclobutan-Polymere wurde zusätzlich ein zweiter Durchgang gefahren.

### Infrarotspektroskopische Untersuchungen:

Mittels Infrarot- (IR-)spektroskopischer Messungen wurden die synthetisierten Polymere hinsichtlich Ihrer charakteristischen Banden hin untersucht. Hiermit lassen sich verschiedene funktionelle Gruppen identifizieren und relativ quantifizieren. Für die in den Beispielen aufgezeigten Messungen wurde ein FT-IR-Spektroskop der Fa. Nicolet mit ATR-Einheit verwendet.

### Beispiel 1 - Herstellung eines Polyurethan-Hartschaums:

200g eines bis zu 280°C ausgehärteten Polycyanurats, das aus Dicyanatobisphenol-A (DCBA) hergestellt worden war, wurden in 200g 2-Aminoethanol bei einer Temperatur von 172°C unter Rückfluss für 16h einer Aminolyse unterzogen. Das überschüssige Agens wurde destillativ mittels Rotationsverdampfer unter Vakuum bei 10mbar und bis zu einer Ölbadtemperatur von 160°C abgezogen. Es erfolgten keine weiteren Trennungsschritte, so dass 100% des beim Recycling erhaltenen Materials in den nächsten Schritten wieder eingesetzt wird.

13,2 Ma-% des hochviskosen Recyclats wurden bei 90°C aufgeschmolzen und in 11,2Ma-% 1,4-Butandiol und 2,0 Ma-% Glycerin gelöst und 2 Tropfen Wasser als Treibmittel hinzugegeben. Zur entstandenen Lösung wurde als Härter 73,6 Ma-% eines Hexamethylen-1,6-diisocyanat basierten HDI-Biuret Isocyanates hinzugegeben und die Lösung wurde anschließend mit einem Glasstab schnell gerührt. Die bereits vorgemischten Komponenten wurden dann mit einem Speedmixer der Marke Hauschild für 2min. homogenisiert. Die Berechnung des Einsatzes der Komponenten erfolgte unter Zuhilfenahme einer theoretisch gemittelten Hydroxylzahl (486g·kg⁻¹ KOH) des Recyclates. Nachfolgend wurde das Material einen Tag bei Raumtemperatur vorgehärtet und 1h bei 100°C und 1h bei 150°C nachgehärtet. Bei dem hergestellten Material handelt es sich um einen Polyurethan-Hartschaum.

Das gehärtete Material wurde mittels Torsions-DMA, Shore Härte A Messung, Dichtebestimmung und thermogravimetrischer Analyse (TGA) charakterisiert (siehe Tabelle 2). Die mittels Torsions-DMA gemessenen Torsionsmodulkurven sowie der jeweilige tan*δ* der Beispiele 1 bis 3 sind in Figur 3d dargestellt (siehe Figur 3d).

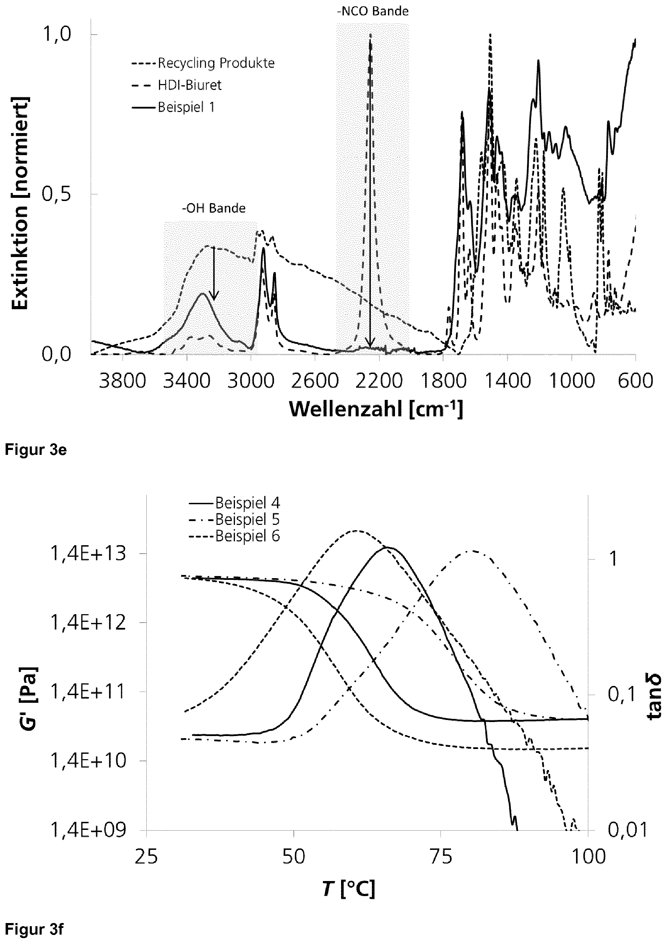

Des Weiteren wurden IR-Spektren sowohl von den Recyclat Abbauprodukten als auch vom verwendeten Isocyanat aufgenommen und die Spektren in einer Überlagerung mit dem Spektrum des entstandenen Polyurethan Polymers verglichen. Hierbei wird die Reaktion der Isocyanatgruppen des verwendeten HDI-Biuret Isocyanates mit den OH-Gruppen der Recyclat Abbauprodukte gezeigt: Die Intensität der Hydroxylbande zwischen 3200-3600cm⁻¹ der Recycling Produkte nimmt stark ab und die Isocyanatbande des Härters ist bei 2250cm⁻¹ nach der Polymerisation nicht mehr zu erkennen (siehe Figur 3e).

### Beispiel 2 - Herstellung eines Polyurethan-Hartschaums:

Das Recyclat wurde analog zum Beispiel 1 hergestellt.

Analog zum Beispiel 1 wurde folgende Mischung verarbeitet: 14,3 Ma-% des Recyclats mit 12,2 Ma-% 1,4-Butandiol und 2,1 Ma-% Glycerin und 2 Tropfen Wasser als Treibmittel. Als Härter-Komponente wurden 71,4 Ma-% eines P-MDI (Polymeres Diphenylmethandiisocyanat) hinzugegeben. Die Berechnung des Einsatzes der Komponenten erfolgte unter Zuhilfenahme einer theoretisch gemittelten Hydroxylzahl (486g·kg⁻¹ KOH) des Recyclats. Nachfolgend wurde das Material einen Tag bei Raumtemperatur vorgehärtet und 1h bei 100°C und 1h bei 150°C nachgehärtet. Bei dem hergestellten Material handelt es sich um einen Polyurethan-Hartschaum.

Das gehärtete Material wurde mittels Torsions-DMA, Shore Härte A Messung, Dichtebestimmung mittels hydrostatischer Waage und thermogravimetrischer Analyse (TGA) charakterisiert (siehe Tabelle 2 und Figur 3d).

### Beispiel 3 - Herstellung eines Polyurethan-Hartschaums:

Das Recyclat wurde analog zum Beispiel 1 hergestellt.

Analog zum Beispiel 1 wurde folgende Mischung verarbeitet:
22,4 Ma-% des Recyclats mit 19,1 Ma-% Rizinusöl und 3,4 Ma-% Glycerin und 2 Tropfen Wasser als Treibmittel. Als Härter-Komponente wurden 55,1 Ma-% eines Hexamethylen-1,6-diisocyanat basierten HDI-Biuret Isocyanates hinzugegeben. Die Berechnung des Einsatzes der Komponenten erfolgte unter Zuhilfenahme einer theoretisch gemittelten Hydroxylzahl (486 g·kg⁻¹ KOH) des Recyclates. Nachfolgend wurde das Material einen Tag bei Raumtemperatur vorgehärtet und 1h bei 100°C und 1 h bei 150°C nachgehärtet. Bei dem hergestellten Material handelt es sich um einen Polyurethan-Hartschaum.

Das gehärtete Material wurde mittels Torsions-DMA, Shore Härte A Messung, Dichtebestimmung mittels hydrostatischer Waage und thermogravimetrischer Analyse (TGA) charakterisiert (siehe Tabelle 2 und Figur 3d).

**Tabelle 2**

| **Bezeichnung** | **Shore Härte D_{im Kern}** | **Shore Härte D_{Außenhaut}** | ***ρ* [kg·m⁻³]** | ***T*_{g},DMA tan δ [°C]** | ***T*_{Zersetzung, TGA} [°C]** |
|---|---|---|---|---|---|
| Beispiel 1 | 51 | 54 | 0,498 | 75 | 265 |
| Beispiel 2 | 22 | 74 | 0,308 | 128 | 263 |
| Beispiel 3 | 59 | 68 | 0,750 | 94 | 200 |

### Beispiel 4 - Herstellung eines Polyurethan Gießharzes:

151 g eines bis zu 250°C ausgehärteten Polycyanurats auf Basis von Dicyanatobisphenol-A (DCBA) wurden in 606g 2-Aminoethanol bei einer Temperatur von 172°C unter Rückfluss für 2h einer Aminolyse unterzogen. Das überschüssige Agens wurde destillativ mittels Rotationsverdampfer unter Vakuum bei 10mbar und bis zu einer Ölbadtemperatur von 160°C abgezogen. Es erfolgten keine weiteren Trennungsschritte, so dass 100 % des beim Recycling erhaltenen Materials in den nächsten Schritten wieder eingesetzt wird.

10,0 Ma-% des hochviskosen Recyclats wurden bei 90°C aufgeschmolzen und in 14,4 Ma-% 1,4-Butandiol gelöst. Zur entstandenen Lösung wurde als Härter 75,6 Ma-% eines Hexamethylen-1,6-diisocyanat basierten HDl-Trimer Isocyanates hinzugegeben und die Lösung wurde anschließend mit einem Glasstab schnell gerührt. Die bereits vorgemischten Komponenten wurden dann mit einem Speedmixer der Marke Hauschild für 2 min. homogenisiert. Die Berechnung des Einsatzes der Komponenten erfolgte unter Zuhilfenahme der analytisch bestimmten Hydroxylzahl (653g·kg⁻¹ KOH) des Recyclates. Nachfolgend wurde das Material einen Tag bei Raumtemperatur vorgehärtet und 1h bei 100°C und 1h bei 150°C nachgehärtet. Bei dem hergestellten Material handelt es sich um ein Polyurethan-Gießharz.

Das gehärtete Material wurde mittels Torsions-DMA charakterisiert und die Glasübergangstemperatur mit 66°C bestimmt (siehe Figur 3f).

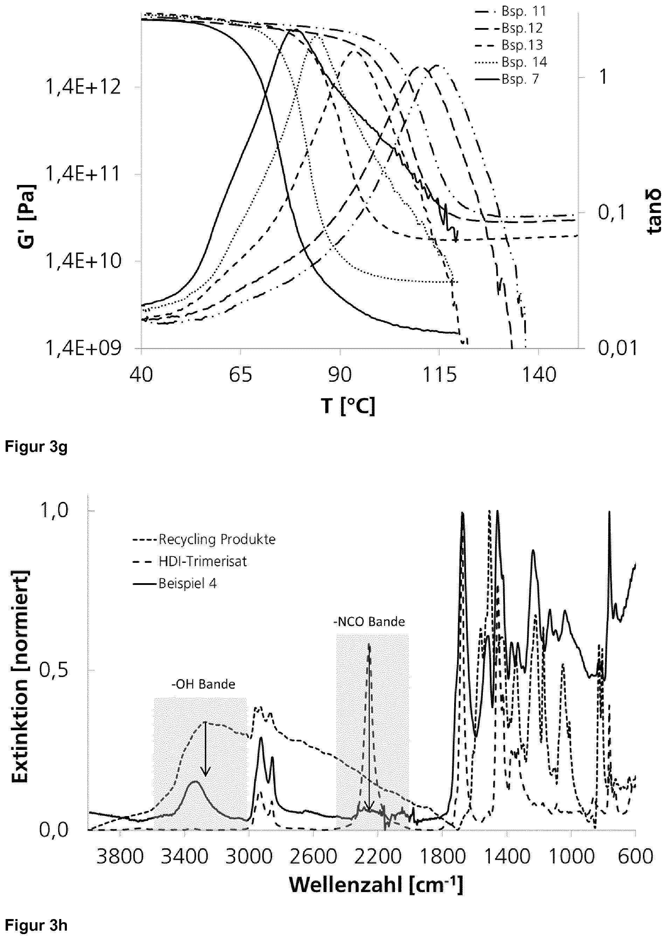

Des Weiteren wurden IR-Spektren sowohl von den Recyclat Abbauprodukten als auch vom verwendeten Isocyanat aufgenommen und die Spektren in einer Überlagerung mit dem Spektrum des entstandenen Polyurethan Polymers verglichen. Hierbei wird die Reaktion der Isocyanatgruppen des verwendeten HDI-Biuret Isocyanates mit den OH-Gruppen der Recyclat Abbauprodukte deutlich: Die Hydroxylbande zwischen 3200-3600cm⁻¹ der Recycling Produkte nimmt stark ab und die Isocyanatbande des Härters ist bei 2250cm⁻¹ nach der Polymerisation nicht mehr zu erkennen (siehe Figur 3g).

### Beispiel 5 - Herstellung eines Polyurethan Gießharzes:

Das Recyclat wurde analog zum Beispiel 4 hergestellt.

Analog zum Beispiel 4 wurde folgende Mischung verarbeitet:
20,0 Ma-% des Recyclats mit 8,2 Ma-% 1,4-Butandiol. Als Härter-Komponente wurden 71,8 Ma-% eines Hexamethylen-1,6-diisocyanat basierten HDl-Trimer Isocyanates hinzugegeben. Bei dem hergestellten Material handelt es sich um ein Polyurethan-Gießharz.

Das gehärtete Material wurde mittels Torsions-DMA charakterisiert und die Glasübergangstemperatur mit 80°C bestimmt. Hier ist zu erkennen, dass eine Erhöhung des Recyclatgehaltes auch zu einer Erhöhung der Glasübergangstemperatur führt (siehe Figur 3f).

### Beispiel 6 - Herstellung eines Polyurethan Gießharzes:

Das Recyclat wurde analog zum Beispiel 4 hergestellt.

Analog zum Beispiel 4 wurde folgende Mischung verarbeitet:
20,0 Ma-% des Recyclat mit 6,7 Ma-% 1,4-Butandiol und 2,2 Ma-% Glycerin. Als Härter-Komponente wurden 71,0 Ma-% eines Hexamethylen-1,6-diisocyanat basierten HDI-Trimer Isocyanates hinzugegeben. Bei dem hergestellten Material handelt es sich um ein Polyurethan-Gießharz.

Das gehärtete Material wurde mittels Torsions-DMA charakterisiert und die Glasübergangstemperatur mit 61 °C bestimmt (siehe Figur 3f).

### Beispiel 7 - Herstellung eines Epoxid-Polymers:

125 g eines bis zu 250°C ausgehärteten Polycyanurats auf Basis von Dicyanatobisphenol-A (DCBA) wurden in 498 g Ethylendiamin bei einer Temperatur von 116°C unter Rückfluss für 2,5 h einer Aminolyse unterzogen. Das überschüssige Agens wurde destillativ mittels Rotationsverdampfer unter Vakuum bei 10mbar und bis zu einer Ölbadtemperatur von 160°C abgezogen. Die Aminzahl des so erhaltenen Recyclats wurde analytisch mit einem Wert von 9mol.kg⁻¹ bestimmt. Es erfolgten keine weiteren Trennungsschritte, so dass 100% des beim Recycling erhaltenen Materials in den nächsten Schritten wieder eingesetzt wird.

46,9 Ma-% des bei Raumtemperatur starren Recyclats wurden bei 90°C aufgeschmolzen und mit 53,1 Ma-% des Epoxidharzes DGEBA (Bisphenol A diglycidylether) gemischt. Die entstandene Mischung wurde zunächst über Nacht für 12 h vorvernetzt und dann 1 h bei 100°C und 1h bei 150°C vollständig ausgehärtet. Das entstandene Material war gelb gefärbt und mittels DSC wurde eine Glasübergangstemperatur von 74°C ermittelt. Das Produkt ist ein aminisch gehärtetes Epoxid-Polymer.

Ferner wurde eine Charakterisierung mittels Torsions-DMA durchgeführt. Figur 3g zeigt die Torsions-DMA Kurven der verschiedenen Epoxidpolymermischungen (siehe Tabelle 3 und Figur 3g).

### Beispiel 8 - Herstellung eines Epoxid-Polymers:

Das Recyclat wurde analog zum Beispiel 7 hergestellt.

22,8 Ma-% des bei Raumtemperatur starren Recyclates wurden bei 90°C aufgeschmolzen und mit 77,2 Ma-% des Epoxidharzes DGEBA gemischt. Die entstandene Mischung wurde zunächst über Nacht für 12 h vorvernetzt und dann 1 h bei 100°C und 1 h bei 150°C vollständig ausgehärtet. Das entstandene Material war gelb gefärbt und mittels DSC wurde eine Glasübergangstemperatur von 127°C ermittelt. Die im Vergleich zum Beispiel 4 deutlich höhere Glasübergangstemperatur des Epoxid-Polymers wurde dadurch erreicht, dass die Amingruppen des Recyclats vollständig (theoretisch berechnet zu 100%) umgesetzt wurden.

Ferner wurde eine Charakterisierung mittels Torsions-DMA durchgeführt. Figur 3f zeigt die Torsions-DMA Kurven der verschiedenen Epoxid-Polymersmischungen (siehe Tabelle 3 und Figur 3h).

Des Weiteren wurde eine Sol-Gel Analyse des Polymers durchgeführt. Hierzu wurden 2263,20 mg des Polymers mittels Schwingmühle für ca. 30 min zu einem sehr feinen Pulver zerkleinert. Dieses wurde für 2 Tage auf einem Rollband in Tetrahydrofuran (THF) dispergiert und aufgeschlämmt um lösliche Bestandteile herauszulösen. Der Solanteil wurde dann nach abfiltrieren der festen Bestandteile und abrotieren des THFs gravimetrisch mit 2,2 Ma-% bestimmt. Hieraus lässt sich Schlussfolgern, dass das Material eine Vernetzungsreaktion vollzogen haben muss, da sonst ein wesentlich höherer Anteil an Polymer löslich wäre.

### Beispiel 9-14- Herstellung eines Epoxid-Polymers:

Das Recyclat wurde jeweils analog zum Beispiel 7 hergestellt.

Das bei Raumtemperatur starre Recyclat wurde bei 90°C aufgeschmolzen und mit verschiedenen Anteilen des epoxidgruppenhaltigen DGEBA gemischt. Die entstandenen Mischungen wurden zunächst über Nacht für 12h vorvernetzt und dann 1h bei 100°C und 1 h bei 150°C vollständig ausgehärtet. Das entstandene Material war gelb gefärbt und mittels Torsions-DMA wurden die Glasübergangstemperaturen anhand des tan*δ* ermittelt. Hier lässt sich eine klare Abhängigkeit der Glasübergangstemperatur vom eingesetzten Recyclatanteil ableiten (siehe Tabelle 3 und Figur 3g und 3h).

**Tabelle 3**

| **Bsp.** | **Epoxidkomponente** | **Anteil_{Recyclat} [Ma-%]** | **Anteil_{DGEBA} [Ma-%]** | ***T*_{g,tan δ} [°C]** |
|---|---|---|---|---|
| 9 | DGEBA | 12,8 | 87,2 | 60 |
| 10 | DGEBA | 18,1 | 81,9 | 83 |
| 8 | DGEBA | 22,8 | 77,2 | 128 |
| 11 | DGEBA | 26,9 | 73,1 | 113 |
| 12 | DGEBA | 30,7 | 69,3 | 109 |
| 13 | DGEBA | 37,1 | 62,9 | 92 |
| 14 | DGEBA | 42,4 | 57,6 | 84 |
| 7 | DGEBA | 46,9 | 53,1 | 78 |

### Beispiel 15 - Polyurethan aus alkoholysiertem Polycyanurat:

5,002g eines bis zu 250°C ausgehärteten Polycyanurats, das aus Dicyanatobisphenol-A (DCBA) hergestellt worden war, wurden in 21,872g Ethylenglycol bei einer Temperatur von 197°C unter Rückfluss für 24h einer Alkoholyse unterzogen. Das überschüssige Agens wurde destillativ mittels Rotationsverdampfer unter Vakuum abgezogen. Es erfolgten keine weiteren Trennungsschritte, so dass 100% des beim Recycling erhaltenen Materials in den nächsten Schritten wieder eingesetzt wird.

20,0 Ma-% des mittelviskosen Recyclats wurden in 7,8 Ma-% 1,4-Butandiol gelöst. Zur entstandenen Lösung wurde als Härter 72,2 Ma-% eines Hexamethylen-1,6-diisocyanat basierten HDI-Trimer Isocyanates hinzugegeben, die Lösung wurde anschließend mit einem Glasstab schnell gerührt und homogenisiert. Das Isocyanat wurde hierbei im Überschuss zugegeben. Nachfolgend wurde das Material 12h bei 100°C und 2 h bei 200°C ausgehärtet. Bei dem hergestellten Material handelt es sich um ein Polyurethan. Dieses war, im Gegensatz zu den Recycling-Ausgangsprodukten, in Ethanol nicht mehr löslich.

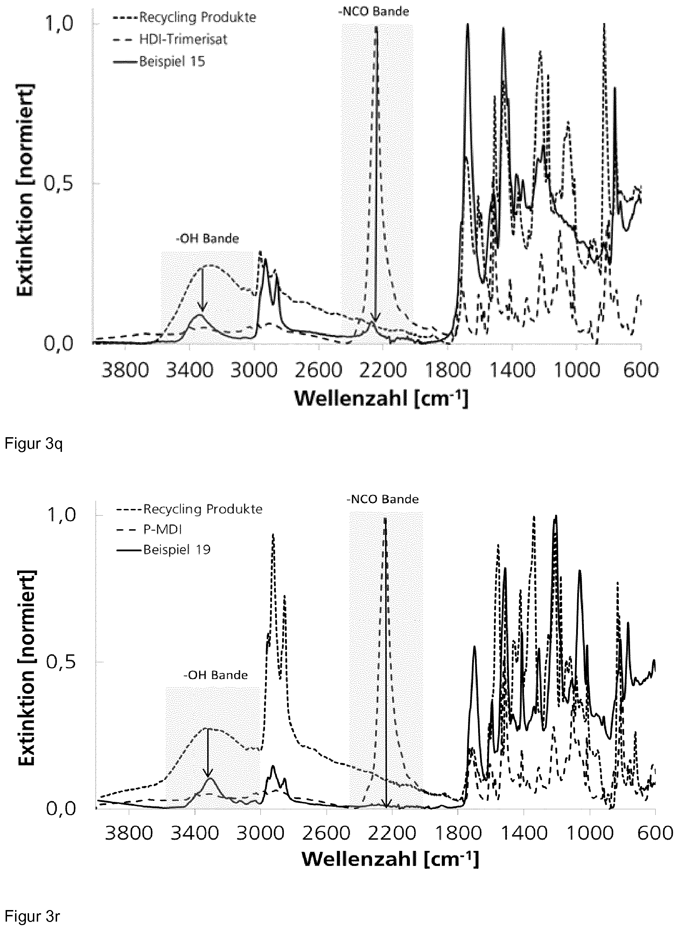

Es wurden IR-Spektren sowohl von den Recyclat Abbauprodukten als auch vom verwendeten Isocyanat aufgenommen und die Spektren in einer Überlagerung mit dem Spektrum des entstandenen Polyurethan-Polymers verglichen. Hierbei wird die Reaktion der Isocyanatgruppen des verwendeten HDI-Biuret Isocyanates mit den OH-Gruppen der Recyclat Abbauprodukte gezeigt: Die Intensität der Hydroxylbande zwischen 3200-3600cm⁻¹ der Recycling Produkte nimmt stark ab und die Isocyanatbande des Härters ist bei 2250cm⁻¹ nur noch schwach - aufgrund des Überschusses an Isocyanat - zu sehen (siehe Figur 3q). Mit einer weiteren Härtungsstufe könnte das restliche Isocyanat dann mit der Luftfeuchte oder sich selbst zu Isocyanuratgruppen weiter umgesetzt werden.

### Beispiel 16 - Herstellung eines Polymethacrylats:

Das Recyclat wurde analog zum Beispiel 4 hergestellt.

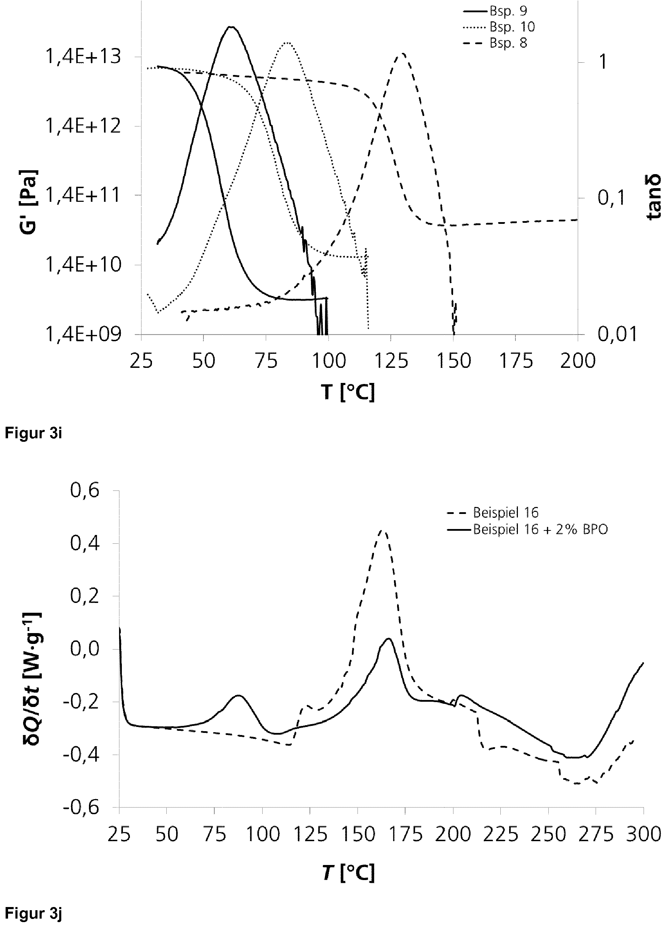

In einem 500ml-Dreihalskolben mit Tropftrichter, Innenthermometer und Calciumchlorid-Trockenröhrchen werden 8.87 g des Recyclates in einem Gemisch von 150ml wasserfreiem Chloroform und 24.9 g wasserfreiem Triethylamin gelöst. Danach tropft man bei RT 25.3g Methacrylsäureanhydrid innerhalb von ca. 15 min zu, die Innentemperatur steigt dabei nur geringfügig an (um ca. 3°C). Nach dem Stehen über Nacht wird die organische Phase 3-mal mit jeweils 100 ml dest. Wasser gewaschen. Das Lösemittel wird unter vermindertem Druck bei RT abdestilliert, es verbleiben ca. 20g eines gelbgrünen viskosen Öls, das nicht mehr nach Methacrylsäureanhydrid riecht. Das Produkt ist mischbar mit Chloroform, Ethanol, Aceton und Toluol, jedoch unlöslich in Cyclohexan und n-Pentan. Versuche zur Umfällung aus Chloroform/Cyclohexan/n-Pentan (V/V/V = 1/1/1) ergaben bei -18°C ein flüssiges Zweiphasensystem. Auf einen Umkristallisationsversuch aus Cyclohexan in der Siedehitze wurde aufgrund der potenziellen Reaktivität der Substanz verzichtet (siehe Figur 3i).

Dem so erhaltenen Produkt wurde 2 Ma-% Benzoylperoxid (BPO) als Radikalinitiator hinzugegeben. Sowohl diese, als auch eine Variante ohne Radikalinitiator zeigten in der DSC deutliche Reaktionspeaks, was auf eine Vernetzung und somit Aushärtung des Systems zurückzuführen ist (siehe Abbildung 3j). Allerdings lässt sich durch die Zugabe des Radikalinitiators eine deutliche Temperaturerniedrigung der Härtereaktion erreichen.

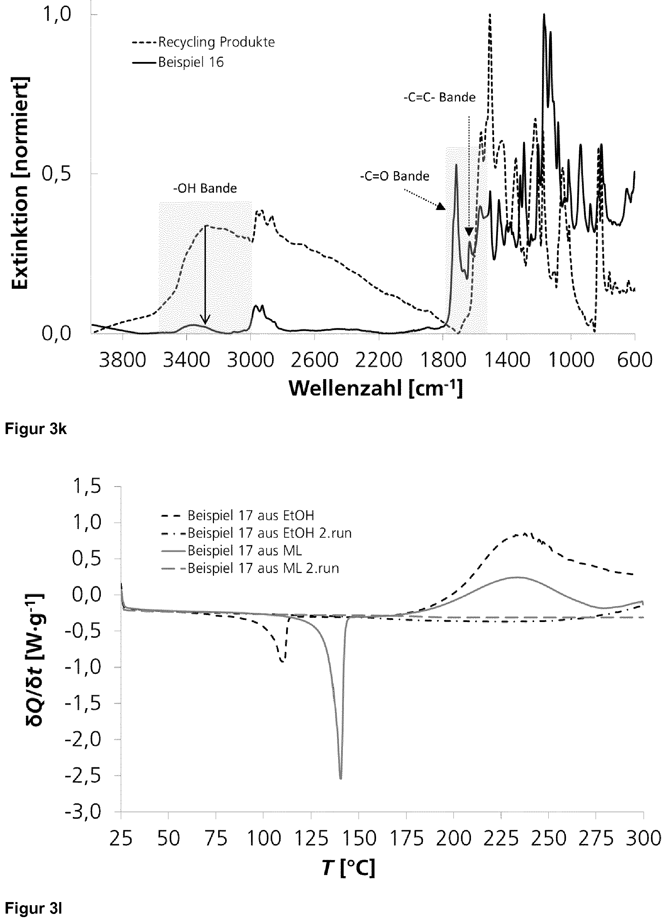

Des Weiteren wurde ein IR Spektrum beider Phasen aufgenommen und mit dem Spektrum des Recyclates überlagert. Hier wird durch die Abnahme der Intensität der OH-Bande bei 3200-3600cm⁻¹ in beiden Spektren deutlich, dass die OH-Gruppen mit dem Säurechlorid umgesetzt wurden. Zudem sieht man sowohl Banden für die Carbonylgruppe bei ca. 1710cm⁻¹ als auch für die C=C Doppelbindung bei 1630cm⁻¹ die durch das Acrylieren eingeführt wurden (siehe Figur 3k).

Anschließend wurden ca. 10 mg des synthetisierten Materials bei 120°C im Aluschälchen auf eine Heizplatte gegeben und das Gemisch kontinuierlich auf 250°C geheizt. Nach 30 min Reaktionszeit bildete sich ein dünner, gelblicher Polymerfilm aus, der nicht mehr in Aceton löslich war.

### Beispiel 17 - Herstellung eines Perfluorcyclobutan-Polymers:

Das Recyclat wurde analog zum Beispiel 4 hergestellt.

In einem 500 ml-Dreihalskolben mit Tropftrichter, Innenthermometer und Calciumchlorid-Trockenröhrchen werden 3.55 g des Recyclates in einem Gemisch von 200 ml wasserfreiem Chloroform und 18.73 g wasserfreiem Triethylamin gelöst. Man kühlt mit Eiswasser und tropft danach eine Lösung von 29.19 g 4-Trifluorvinyloxy-benzoylchlorid in 40ml wasserfreiem Chloroform so zu, dass die Innentemperatur nicht über 5°C steigt (ca. 45 min). Nach dem Stehen über Nacht bei RT wird 5-mal mit je 100 ml dest. Wasser gewaschen und die verbleibende organische Phase zur Trockne eingeengt. Die erhaltene Schmiere wird in 100 ml Ethanol aufgenommen und über Nacht in eine Tiefkühltruhe gestellt. Man saugt die ausgefallenen Partikel über einer Fritte schnell ab und wäscht mit 50 ml eiskaltem Ethanol nach. Nach dem Trocknen bei RT fällt eine erste Produktfraktion an (1.85 g). Die verbleibende ethanolische Mutterlauge wird bei RT getrocknet und der schmierige Rückstand in 45 ml Cyclohexan/n-Pentan/Methylenchlorid (V = 1/1/1) gelöst. Nach dem Stehen über Nacht in einer Tiefkühltruhe wird die zweite Partikelfraktion über einer Nutsche schnell abgesaugt und mit 30ml eiskaltem Cyclohexan/n-Pentan/Methylenchlorid (V = 1/1/1) gewaschen. Nach dem Trocknen bei RT werden 1.25 g Zweitfraktion erhalten.

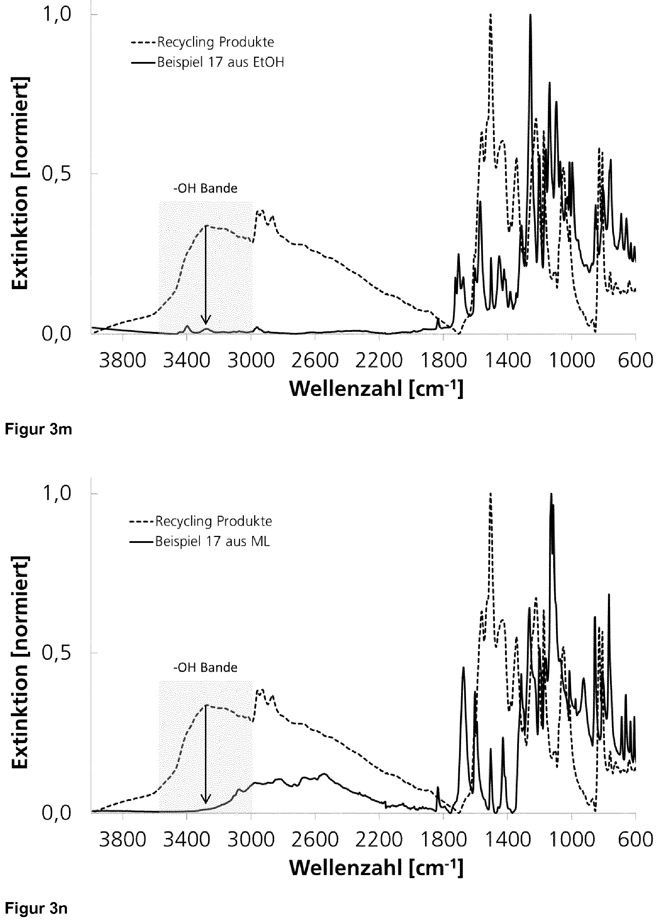

Die so erhaltenen Fraktionen wurden mittels DSC bis zu einer Temperatur von 300°C aufgeheitzt. Beide Fraktionen zeigen bei einem identischen Temperaturbereich (225-235°C) den Reaktionspeak. Allerdings unterscheiden sich die Fraktionen in ihrem Schmelzverhalten, dass um ca. 30°C verschoben ist. Dieser Effekt lässt sich durch die unterschiedliche Molmasse der beiden Produktfraktionen erklären. Nach einem zweiten Aufheizintervall können keine Reaktions- oder Schmelzpeaks mehr detektiert werden, was auf ein Aushärten des Materials zurückzuführen ist (siehe Figur 3l und Figur 3m).

Des Weiteren wurde ein IR Spektrum beider Phasen aufgenommen und mit dem Spektrum des Recyclates überlagert. Hier wird durch die Abnahme der Intensität der OH-Bande bei 3200-3600 cm⁻¹ in beiden Spektren deutlich, dass die OH-Gruppen mit dem Säurechlorid umgesetzt wurden (siehe Figur 3n).

Anschließend wurden ca. 5 mg der beiden erhaltenen Chargen des synthetisierten Materials bei 120°C im Aluschälchen auf eine Heizplatte gegeben und kontinuierlich auf 250°C geheizt. Nach 30min Reaktionszeit bildete sich ein dünner, dunkelbrauner Polymerfilm aus, der nicht mehr in Aceton löslich war.

### Beispiel 18 - Herstellung eines Polyacrylates:

Das Recyclat wurde analog zum Beispiel 4 hergestellt.

In einem 250 ml-Dreihalskolben mit Septum, Innenthermometer und Stickstoff-Balon (über einen Zweiwegehahn) werden 4.435 g DS-87 in 60 ml THF gelöst. Danach werden 20 ml TEA zugegeben und das Gemisch auf 0°C abgekühlt (Kältemischung aus Eis-Kochsalz). Anschließend wird eine Acryloylchlorid-Lösung in THF innerhalb von einer Stunde zugetropft (Spritze mit Kanüle), so dass die Innentemperatur nicht über 2°C steigt und man lässt das Gemisch für eine weitere Stunde reagieren. Nach zwei Stunden Reaktionszeit wird das Kältebad entfernt und man lässt die Innentemperatur auf ca. 10°C steigen.

### Aufarbeitung:

1. 300 ml kaltes Wasser werden zugegeben.
2. Extraktion mit Chloroform (4x50 ml) (3 Phasen zu beobachten: eine wässrige Phase, eine feste Phase in der wässrigen, organische Phase, feste Phase löst sich nicht in Chloroform).
3. Organische Phase wird gesammelt und mit wasserfreiem Natriumsulfat getrocknet
4. Organische Phase wird am Rotationsverdampfer eingeengt

Die Masse der so erhaltenen organischen Phase betrug 5.70g. 1g der organischen Phase wurde in 0,67g Chloroform gelöst und 20mg Benzoylperoxid hinzugegeben. Die so erhaltene Lösung wurde in ein Aluschälchen gegeben und im Ofen für 20min bei 120°C und für 2h bei 150°C gehärtet. Der so erhaltene dünne Polymerfilm war nicht mehr in THF oder Chloroform löslich. Dies lässt auf eine Vernetzung schlussfolgern.

Des Weiteren wurde ein IR Spektrum beider Phasen aufgenommen und mit dem Spektrum des Recyclates überlagert. Hier wird durch die Abnahme der Intensität der OH-Bande bei 3200-3600cm⁻¹ in beiden Spektren deutlich, dass die OH-Gruppen mit dem Säurechlorid umgesetzt wurden. Zudem sieht man sowohl Banden für die Carbonylgruppe bei ca. 1710cm⁻¹ als auch für die C=C Doppelbindung bei 1630cm⁻¹ die durch das Acrylieren eingeführt wurden (siehe Figur 3o).

### Beispiel 19 - Polyurethan aus alkoholysiertem Polycyanurat:

4,737g eines bis zu 250°C ausgehärteten Polycyanurats, das aus Dicyanatobisphenol-A (DCBA) hergestellt worden war, wurden in 23,220g Octanol bei einer Temperatur von 195°C unter Rückfluss für 48h einer Alkoholyse unterzogen. Das überschüssige Agens wurde destillativ mittels Rotationsverdampfer unter Vakuum abgezogen. Es erfolgten keine weiteren Trennungsschritte, so dass 100% des beim Recycling erhaltenen Materials in den nächsten Schritten wieder eingesetzt wird.

34,2 Ma-% des mittelviskosen Recyclats wurden in 13,2 Ma-% 1,4-Butandiol gelöst. Zur entstandenen Lösung wurde als Härter 52,6 Ma-% eines P-MDI basierten Isocyanates hinzugegeben, die Lösung wurde anschließend mit einem Glasstab schnell gerührt und homogenisiert. Nachfolgend wurde das Material 15 min bei 200°C ausgehärtet. Bei dem hergestellten Material handelt es sich um ein Polyurethan. Dieses war, im Gegensatz zu den Recycling-Ausgangsprodukten, in Ethanol nicht mehr löslich.

Es wurden IR-Spektren sowohl von den Recyclat Abbauprodukten als auch vom verwendeten Isocyanat aufgenommen und die Spektren in einer Überlagerung mit dem Spektrum des entstandenen Polyurethan-Polymers verglichen. Hierbei wird die Reaktion der Isocyanatgruppen des verwendeten HDI-Biuret Isocyanates mit den OH-Gruppen der Recyclat Abbauprodukte gezeigt: Die Intensität der Hydroxylbande zwischen 3200-3600cm⁻¹ der Recycling Produkte nimmt stark ab und die Isocyanatbande des Härters ist bei 2250cm⁻¹ nach der Polymerisation nicht mehr zu erkennen (siehe Figur 3r).

## Patentansprüche

1. Verfahren zum Herstellen eines organischen Polymermaterials, dessen Herstellung mindestens eine hydroxyl- oder aminogruppenhaltige Verbindung als Ausgangskomponente erfordert, umfassend die Schritte:
- Bereitstellen eines Materials, das durch Aminolyse und/oder Alkoholyse eines Cyanurat-Polymers und anschließendes Entfernen des Aminolyse- und/oder Alkoholyse-Agens entstanden ist,
- Umsetzen dieses Materials ohne vorheriges weiteres Aufarbeiten desselben mit mindestens einer Verbindung, ausgewählt unter di- und/oder höherfunktionellen Verbindungen, deren funktionelle Gruppen mit Hydroxygruppen oder Aminogruppen reagieren können, oder Aldehyden und
- Aushärten des Gemischs durch eine Vernetzungsreaktion.

2. Verfahren nach Anspruch 1, worin das genannte Material durch Aminolyse mit einem Aminolysereagens, ausgewählt unter Ammoniak, einem Amin der Formel (1)
NH₂-R"-X (1)
oder einem Amin der Formel (2)
R'-NH-R"-X (2)
und/oder durch Alkoholyse mit einem Alkoholysereagens, ausgewählt unter Hydroxylverbindungen der Formel (3)
R"'-OH (3)
durchgeführt wird, worin R" ein zweibindiger, ggf. substituierter Kohlenwasserstoffrest ist, X ausgewählt ist unter H, OH, NH₂ und NHR' und R' eine unsubstituierte oder mit mindestens einer Hydroxygruppe substituierte Alkylgruppe oder eine unsubstituierte oder mit Alkyl substituierte Arylgruppe ist und R'" eine unsubstituierte oder mit mindestens einer Hydroxygruppe substituierte Alkylgruppe oder eine unsubstituierte oder substituierte Arylgruppe ist, wobei die Arylgruppe im letzteren Fall mit einem oder mehreren Substituenten substituiert ist, ausgewählt unter Alkyl, Aryl, Hydroxy, Hydroxyalkyl und Hydroxyaryl.

3. Verfahren nach Anspruch 2, durchgeführt mit einem Aminolysereagens der Formel (1) oder (2), worin X in den Formeln (1) oder (2) OH bedeutet und R eine geradkettige oder verzweigte oder cyclische Alkylen- oder Alkenylengruppe ist, und worin das Aushärten des Gemischs durch eine Vernetzung von im Gemisch vorhandenen Gruppen erfolgt, wobei die di- und/oder höherfunktionelle Verbindung ausgewählt ist unter
(a) di- und/oder höherfunktionellen Isocyanaten, wobei das Gemisch -durch Vernetzung zu einem Polyurethan aushärtet, oder
(c) di- und/oder höherfunktionellen, gesättigten, aliphatischen oder aromatischen Carbonsäuren oder Carbonsäurederivaten, wobei das Gemisch zu einem Polymer vernetzt, wobei ein gesättigter Polyester gebildet wird, oder
(d) α,β-ungesättigten aktivierten Carbonsäuren oder Derivaten, worauf die Mischung durch radikalische Polymerisation der vorhandenen ungesättigten C=C-Doppelbindungen ausgehärtet wird, wobei ein Polyester gebildet wird, oder
(e) Aldehyden, vorzugsweise Formaldehyd, unter der Bedingung, dass das der Aminolyse unterworfene Cyanuratpolymer unter Verwendung aromatischer Cyanate entstanden ist, wobei ein Phenolharz entsteht.

4. Verfahren nach Anspruch 2, durchgeführt mit einem Aminolysereagens der Formel (1) oder (2), worin X in den Formeln (1) oder (2) OH bedeutet und R eine geradkettige oder verzweigte oder cyclische Alkylen- oder Alkenylengruppe ist, und worin das Aushärten des Gemischs durch den Zusatz einer weiteren Komponente erfolgt, wobei die di- und/oder höherfunktionelle Verbindung ausgewählt ist unter
(b) Epichlorhydrin und die Aushärtung des Gemischs zu einem Epoxid-Polymer durch die Zugabe eines Amins oder eines Anhydrids bewirkt wird, oder
(c) di- und/oder höherfunktionellen, ungesättigten, aliphatischen oder aromatischen Carbonsäuren oder Carbonsäurederivaten, wobei das Gemisch polymerisiert und durch die Zugabe von Styrol vernetzt wird, wobei ein ungesättigter Polyester gebildet wird.

5. Verfahren nach Anspruch 2, durchgeführt mit einem Aminolysereagens der Formel (1) oder (2), worin X in den Formeln (1) oder (2) OH bedeutet und R" eine unsubstituierte oder alkylsubstituierte Arylengruppe ist, und worin das Aushärten des Gemischs durch eine Vernetzung von im Gemisch vorhandenen Gruppen erfolgt, wobei die di- und/oder höherfunktionelle Verbindung ausgewählt ist unter
(a) di- und/oder höherfunktionellen Isocyanaten, wobei das Gemisch durch Vernetzung zu einem Polyurethan aushärtet, oder
(c) di- und/oder höherfunktionellen, gesättigten, aliphatischen oder aromatischen Carbonsäuren oder Carbonsäurederivaten, wobei das Gemisch zu einem Polymer vernetzt, wobei ein gesättigter Polyester gebildet wird, oder
(d) α,β-ungesättigten aktivierten Carbonsäuren oder Derivaten, worauf die Mischung durch radikalische Polymerisation der vorhandenen ungesättigten C=C-Doppelbindungen ausgehärtet wird, wobei ein Polyester gebildet wird, oder
(e) Aldehyden, vorzugsweise Formaldehyd, unter der Bedingung, dass das der Aminolyse unterworfene Cyanuratpolymer unter Verwendung aromatischer Cyanate entstanden ist, wobei ein Phenolharz entsteht, oder
(f) Bromcyan, wobei eine Mischung aus oder mit mindestens difunktionellen Cyanaten entsteht, die thermisch vernetzt werden kann oder unter Einbeziehung verbliebener aromatischer Hydroxygruppen vernetzt wird und dabei ein Polycyanurat bildet.

6. Verfahren nach Anspruch 2, durchgeführt mit einem Aminolysereagens der Formel (1) oder (2), worin X in den Formeln (1) oder (2) OH bedeutet und R" eine unsubstituierte oder alkylsubstituierte Arylengruppe ist, und worin das Aushärten des Gemischs durch den Zusatz einer weiteren Komponente erfolgt, wobei die di- und/oder höherfunktionelle Verbindung ausgewählt ist unter
(b) Epichlorhydrin, und die Aushärtung des Gemischs zu einem Epoxid-Polymer durch die Zugabe eines Amins oder eines Anhydrids bewirkt wird, oder
(c) di- und/oder höherfunktionellen, ungesättigten, aliphatischen oder aromatischen Carbonsäuren oder Carbonsäurederivaten, wobei das Gemisch polymerisiert und durch die Zugabe von Styrol vernetzt wird, wobei ein ungesättigter Polyester gebildet wird, oder
(f) Bromcyan, wobei eine Mischung aus oder mit mindestens difunktionellen Cyanaten entsteht und die Härtung unter Zusatz copolymerisierender mono und di- und/oder mehrfunktioneller Cyanate, Phenole oder weiterer Coreaktanden erfolgt, bei der durch Reaktionen von Cyanatgruppen mit Cyanatgruppen, aromatischen OH-Gruppen oder weiteren funktionellen Gruppen Vernetzungsstrukturen entstehen, die ein Cyanurat-Copolymer bilden.

7. Verfahren nach Anspruch 2, durchgeführt mit einem Aminolysereagens der Formel (1) oder (2), worin X in den Formeln (1) oder (2) H bedeutet und worin das Aushärten des Gemischs durch eine Vernetzung von im Gemisch vorhandenen Gruppen erfolgt, wobei die di- und/oder höherfunktionelle Verbindung ausgewählt ist unter
(a) di- und/oder höherfunktionellen Isocyanaten, wobei das Gemisch -durch Vernetzung zu einem Polyurethan aushärtet, oder
(c) di- und/oder höherfunktionellen, gesättigten, aliphatischen oder aromatischen Carbonsäuren oder Carbonsäurederivaten, wobei das Gemisch zu einem Polymer vernetzt, wobei ein gesättigter Polyester gebildet wird, oder
(d) α,β-ungesättigten aktivierten Carbonsäuren oder Derivaten, worauf die Mischung durch radikalische Polymerisation der vorhandenen ungesättigten C=C-Doppelbindungen ausgehärtet wird, wobei ein Polyester gebildet wird, oder
(e) Aldehyden, vorzugsweise Formaldehyd, unter der Bedingung, dass das der Aminolyse unterworfene Cyanuratpolymer unter Verwendung aromatischer Cyanate entstanden ist, wobei ein Phenolharz entsteht, oder
(f) Bromcyan, wobei eine Mischung aus oder mit mindestens difunktionellen Cyanaten entsteht, die thermisch vernetzt werden kann oder unter Einbeziehung verbliebener aromatischer Hydroxygruppen vernetzt wird und dabei ein Polycyanurat bildet.

8. Verfahren nach Anspruch 2, durchgeführt mit einem Aminolysereagens der Formel (1) oder (2), worin X in den Formeln (1) oder (2) H bedeutet, und worin das Aushärten des Gemischs durch den Zusatz einer weiteren Komponente erfolgt, wobei die di- und/oder höherfunktionelle Verbindung ausgewählt ist unter
(b) Epichlorhydrin, und die Aushärtung des Gemischs zu einem Epoxid-Polymer durch die Zugabe eines Amins oder eines Anhydrids bewirkt wird, oder
(c) di- und/oder höherfunktionellen, ungesättigten, aliphatischen oder aromatischen Carbonsäuren oder Carbonsäurederivaten, wobei das Gemisch polymerisiert und durch die Zugabe von Styrol vernetzt wird, wobei ein ungesättigter Polyester gebildet wird, oder
(f) Bromcyan, wobei eine Mischung aus oder mit mindestens difunktionellen Cyanaten entsteht und die Härtung unter Zusatz copolymerisierender mono und di- und/oder mehrfunktioneller Cyanate, Phenole oder weiterer Coreaktanden erfolgt, bei der durch Reaktionen von Cyanatgruppen mit Cyanatgruppen, aromatischen OH-Gruppen oder weiteren funktionellen Gruppen Vernetzungsstrukturen entstehen, die ein Cyanurat-Copolymer bilden.

9. Verfahren nach Anspruch 2, durchgeführt mit einem Aminolysereagens der Formel (1) oder (2), worin X in den Formeln (1) oder (2) NH₂ oder NHR'" bedeutet, wobei R'" eine Alkylgruppe oder eine unsubstituierte oder mit Alkyl substituierte Arylgruppe ist, und worin das Aushärten des Gemischs durch eine Vernetzung von im Gemisch vorhandenen Gruppen erfolgt, wobei die di- und/oder höherfunktionelle Verbindung ausgewählt ist unter
(a) di- und/oder höherfunktionellen Isocyanaten, wobei das Gemisch -durch Vernetzung zu einem Polyurethan aushärtet, oder
(b) di- oder höherfunktionellen Epoxiden, wobei das Gemisch vernetzt, oder
(c) di- und/oder höherfunktionellen, gesättigten, aliphatischen oder aromatischen Carbonsäuren oder Carbonsäurederivaten, wobei das Gemisch zu einem Polymer vernetzt, wobei ein gesättigtes Polyester-Polyamidcopolymer gebildet wird, oder
(d) α,β-ungesättigten aktivierten Carbonsäuren oder Derivaten, worauf die Mischung durch radikalische Polymerisation der vorhandenen ungesättigten C=C-Doppelbindungen ausgehärtet wird, wobei ein Polyester gebildet wird.

10. Verfahren nach Anspruch 2, durchgeführt mit einem Aminolysereagens der Formel (1) oder (2), worin X in den Formeln (1) oder (2) NH₂ oder NHR'" bedeutet, worin R'" eine Alkylgruppe oder eine unsubstituierte oder mit Alkyl substituierte Arylgruppe ist, und worin das Aushärten des Gemischs durch den Zusatz einer weiteren Komponente erfolgt, wobei die di- und/oder höherfunktionelle Verbindung ausgewählt ist unter
(b) di- oder höherfunktionellen Epoxiden, wobei das Gemisch mit einem Amin oder Anhydrid vernetzt wird und sich ein Epoxidpolymer bildet, oder
(c) di- und/oder höherfunktionellen, ungesättigten, aliphatischen oder aromatischen Carbonsäuren oder Carbonsäurederivaten, wobei das Gemisch polymerisiert und durch die Zugabe von Styrol vernetzt wird, wobei ein ungesättigtes Polyester-Polyamidcopolymer gebildet wird.

11. Verfahren nach Anspruch 2, durchgeführt mit einem Aminolysereagens der Formel (1) oder (2), worin das genannte Material durch Aminolyse mit Ammoniak entstanden ist und worin das Aushärten des Gemischs durch eine Vernetzung von im Gemisch vorhandenen Gruppen erfolgt, wobei die di- und/oder höherfunktionelle Verbindung ausgewählt wird unter
(a) di- und/oder höherfunktionellen Isocyanaten, wobei das Gemisch durch Vernetzung zu einem Polyurethan aushärtet wird, oder
(b) di- oder höherfunktionellen Epoxiden, wobei das Gemisch vernetzt, oder
(c) di- und/oder höherfunktionellen, gesättigten, aliphatischen oder aromatischen Carbonsäuren oder Carbonsäurederivaten, wobei das Gemisch zu einem Polymer vernetzt, wobei ein gesättigtes Polyester-Polyamidcopolymer gebildet wird, oder
(d) α,β-ungesättigten aktivierten Carbonsäuren oder Derivaten, worauf die Mischung durch radikalische Polymerisation der vorhandenen ungesättigten C=C-Doppelbindungen ausgehärtet wird, wobei ein Polyester gebildet wird.
(e1) Aldehyden, vorzugsweise Formaldehyd, unter der Bedingung, dass das der Aminolyse unterworfene Cyanuratpolymer unter Verwendung aliphatischer Cyanate entstanden ist, wobei ein Melaminharz entsteht.
(e2) Aldehyden, vorzugsweise Formaldehyd, unter der Bedingung, dass das der Aminolyse unterworfene Cyanuratpolymer unter Verwendung aromatischer Cyanate entstanden ist, wobei ein Melamin-Phenolharz entsteht.

12. Verfahren nach Anspruch 2, worin das genannte Material durch Aminolyse mit Ammoniak entstanden ist und worin das Aushärten des Gemischs durch den Zusatz einer weiteren Komponente erfolgt, wobei die di- und/oder höherfunktionelle Verbindung ausgewählt wird unter
(b) di- oder höherfunktionellen Epoxiden, wobei das Gemisch mit einem Amin oder Anhydrid vernetzt wird und sich ein Epoxidpolymer bildet, oder
(c) di- und/oder höherfunktionellen, ungesättigten, aliphatischen oder aromatischen Carbonsäuren oder Carbonsäurederivaten, wobei das Gemisch polymerisiert und durch die Zugabe von Styrol vernetzt wird, wobei ein ungesättigtes Polyester-Polyamidcopolymer gebildet wird.

13. Verfahren nach Anspruch 2, durchgeführt mit einem Alkoholysereagens der Formel (3), Formel (3), worin das Aushärten des Gemischs durch eine Vernetzung von im Gemisch vorhandenen Gruppen erfolgt, wobei die di- und/oder höherfunktionelle Verbindung ausgewählt ist unter
(a) di- und/oder höherfunktionellen Isocyanaten, wobei das Gemisch durch Vernetzung zu einem Polyurethan aushärtet, oder
(c) di- und/oder höherfunktionellen, gesättigten, aliphatischen oder aromatischen Carbonsäuren oder Carbonsäurederivaten, wobei das Gemisch zu einem Polymer vernetzt, wobei ein gesättigter Polyester gebildet wird, oder
(d) α,β-ungesättigten aktivierten Carbonsäuren oder Derivaten, worauf die Mischung durch radikalische Polymerisation der vorhandenen ungesättigten C=C-Doppelbindungen ausgehärtet wird, wobei ein Polyester gebildet wird, oder
(e) Aldehyden, vorzugsweise Formaldehyd, unter der Bedingung, dass das der Alkoholyse unterworfene Cyanuratpolymer unter Verwendung aromatischer Cyanate entstanden ist, wobei ein Phenolharz entsteht.

14. Verfahren nach Anspruch 2, durchgeführt mit einem Alkoholysereagens der Formel (3), worin das Aushärten des Gemischs durch den Zusatz einer weiteren Komponente erfolgt, wobei die di- und/oder höherfunktionelle Verbindung ausgewählt ist unter
(b) Epichlorhydrin und die Aushärtung des Gemischs zu einem Epoxid durch die Zugabe eines Amins oder eines Anhydrids bewirkt wird, oder
(c) di- und/oder höherfunktionellen, ungesättigten, aliphatischen oder aromatischen Carbonsäuren oder Carbonsäurederivaten, wobei das Gemisch polymerisiert und durch die Zugabe von Styrol vernetzt wird, wobei ein ungesättigter Polyester gebildet wird, oder

15. Verfahren nach einem der Ansprüche 1 bis 14, umfassend das Bereitstellen eines polycyanurathaltigen Materials und das Durchführen einer Aminolyse und/oder Alkoholyse an diesem Material, um das aminolysierte und/oder alkoholysierte Produkt zu erhalten.

16. Verfahren nach Anspruch 15, worin das polycyanurathaltige Material ohne mechanische Zerkleinerung und ohne Zuhilfenahme eines Lösungsmittels im Aminolysereagens bzw. Alkoholysergeagens umgesetzt wird.

## Claims

1. A process for producing an organic polymer material the production of which requires at least one hydroxyl group-containing or amino group-containing compound as a starting component, comprising the steps:
- providing a material which has resulted from an aminolysis and/or alcoholysis of a cyanurate polymer and subsequent removal of the aminolysis agent and/or alcoholysis agent,
- reacting said material, without prior further processing thereof, with at least one compound selected from di-functional and/or higher-functional compounds having functional groups that can react with hydroxy groups or amino groups, or aldehydes, and
- curing the mixture by a crosslinking reaction.

2. A process according to claim 1, wherein said material is provided by aminolysis with an aminolysis reagent selected from ammonia, an amine having the formula (1)
NH₂-R"-X (1)
or an amine having the formula (2)
R'-NH-R"-X (2)
and/or by alcoholysis with an alcoholysis reagent selected from hydroxy compounds having the formula (3)
R'"-OH (3)
wherein R" is a divalent, optionally substituted hydrocarbon residue, X is selected from H, OH, NH₂ and NHR', and R' is an unsubstituted alkyl group or an alkyl group substituted with at least one hydroxy group, or an unsubstituted aryl group or an aryl group substituted with alkyl, and R'" is an unsubstituted alkyl group or an alkyl group substituted with at least one hydroxy group, or an unsubstituted aryl group or an aryl group substituted with alkyl, the aryl group in the latter case being substituted with one or more substituents selected from alkyl, aryl, hydroxy, hydroxyalkyl and hydroxyaryl.

3. A process according to claim 2, which is carried out with an aminolysis reagent of formula (1) or (2), wherein X in formulae (1) or (2) is OH and R is a straight-chain or branched or cyclic alkylene group or alkenylene group, and wherein the curing of the mixture is effected by crosslinking of groups present in the mixture, wherein the di-functional and/or higher-functional compound is selected from
(a) di-functional and/or higher-functional isocyanates, wherein the mixture is cured by crosslinking to form a polyurethane, or
(c) di-functional and/or higher-functional saturated, aliphatic or aromatic carboxylic acids or carboxylic acid derivatives, wherein the mixture is crosslinked to form a polymer, whereby a saturated polyester is formed, or
(d) α,β-unsaturated activated carboxylic acids or derivatives, followed by curing the mixture by radical polymerization of the present unsaturated C=C double bonds, to form a polyester, or
(e) aldehydes, preferably formaldehyde, provided the cyanurate polymer subjected to aminolysis has been formed using aromatic cyanates, whereby a phenolic resin is formed.

4. A process according to claim 2, which is carried out with an aminolysis reagent of formula (1) or (2), wherein X in formulae (1) or (2) is OH and R is a straight-chain or branched or cyclic alkylene group or alkenylene group, and wherein the curing of the mixture is effected by the addition of a further component, wherein the di-functional and/or higher-functional compound is selected from
(b) epichlorohydrin and the curing of the mixture to an epoxy polymer is effected by the addition of an amine or an anhydride; or
(c) di-functional and/or higher-functional unsaturated, aliphatic or aromatic carboxylic acids or carboxylic acid derivatives, said mixture being polymerized and crosslinked by the addition of styrene, to form an unsaturated polyester.

5. A process according to claim 2, which is carried out with an aminolysis reagent of formula (1) or (2), wherein X in formulae (1) or (2) is OH and R" is an unsubstituted or alkyl-substituted arylene group and wherein the curing of the mixture occurs by crosslinking of groups present in the mixture, wherein the di-functional and/or higher-functional compound is selected from
(a) di-functional and/or higher-functional isocyanates, wherein the mixture is cured by crosslinking to form a polyurethane, or
(c) di-functional and/or higher-functional saturated, aliphatic or aromatic carboxylic acids or carboxylic acid derivatives, wherein the mixture is crosslinked to a polymer, to form a saturated polyester, or
(d) α,β-unsaturated activated carboxylic acids or derivatives, followed by curing the mixture by radical polymerization of the present unsaturated C=C double bonds, to form a polyester, or
(e) aldehydes, preferably formaldehyde, with the proviso that the cyanurate polymer subjected to aminolysis has been formed using aromatic cyanates, whereby a phenolic resin is formed, or
(f) cyanogen bromide, wherein a mixture consisting of or comprising at least difunctional cyanates is formed which can be thermally crosslinked or is crosslinked with incorporation of remaining aromatic hydroxy groups, whereby a polycyanurate is formed.

6. A process according to claim 2 which is carried out with an aminolysis reagent of formula (1) or (2), wherein X in formulae (1) or (2) is OH and R" is an unsubstituted or alkyl-substituted arylene group, and wherein the curing of the mixture is carried out by the addition of a further component, wherein the di-functional and/or higher-functional compound is selected from
(b) epichlorohydrin, and the curing of the mixture to an epoxy polymer is effected by the addition of an amine or an anhydride, or
(c) di-functional and/or higher-functional unsaturated, aliphatic or aromatic carboxylic acids or carboxylic acid derivatives, said mixture being polymerized and crosslinked by the addition of styrene, to form an unsaturated polyester, or
(f) cyanogen bromide, wherein a mixture consisting of or comprising at least difunctional cyanates is formed and the curing is carried out with the addition of copolymerizing mono-functional and di-functional and/or poly-functional cyanates, phenols or further co-reactants, wherein crosslinking structures are formed by reactions of cyanate groups with cyanate groups, aromatic OH groups or further functional groups, which form a cyanurate copolymer.

7. The process according to claim 2 which is carried out with an aminolysis reagent of formula (1) or (2), wherein X in formulae (1) or (2) is H and wherein the curing of the mixture is effected by crosslinking of groups present in the mixture, wherein the di-functional and/or higher-functional compound is selected from
(a) di-functional and/or higher-functional isocyanates, wherein the mixture cures by crosslinking to form a polyurethane, or
(c) di-functional and/or higher-functional saturated, aliphatic or aromatic carboxylic acids or carboxylic acid derivatives, wherein the mixture is crosslinked to a polymer, to form a saturated polyester, or
(d) α,β-unsaturated activated carboxylic acids or derivatives, followed by curing the mixture by radical polymerization of the present unsaturated C=C double bonds, to form a polyester, or
(e) aldehydes, preferably formaldehyde, with the proviso that the cyanurate polymer subjected to aminolysis has been formed using aromatic cyanates, whereby a phenolic resin is formed, or
(f) cyanogen bromide, wherein a mixture consisting of or comprising at least difunctional cyanates is formed which can be thermally crosslinked or is crosslinked with incorporation of remaining aromatic hydroxy groups, whereby a polycyanurate is formed.

8. A process according to claim 2, which is carried out with an aminolysis reagent of formula (1) or (2), wherein X in formulae (1) or (2) is H and wherein the curing of the mixture is effected by the addition of a further component, wherein the di-functional and/or higher-functional compound is selected from
(b) epichlorohydrin, and the curing of the mixture to an epoxy polymer is effected by the addition of an amine or an anhydride, or
(c) di-functional and/or higher-functional unsaturated, aliphatic or aromatic carboxylic acids or carboxylic acid derivatives, said mixture being polymerized and crosslinked by the addition of styrene, to form an unsaturated polyester, or
(f) cyanogen bromide, wherein a mixture consisting of or comprising at least difunctional cyanates is formed and the curing is carried out with the addition of copolymerizing mono-functional and di-functional and/or poly-functional cyanates, phenols or further co-reactants, wherein crosslinking structures are formed by reactions of cyanate groups with cyanate groups, aromatic OH groups or further functional groups, which form a cyanurate copolymer.

9. A process according to claim 2, which is carried out with an aminolysis reagent of formula (1) or (2), wherein X in formulae (1) or (2) is NH₂ or NHR'", wherein R'" is an alkyl group or an unsubstituted or alkyl-substituted aryl group, and wherein the curing of the mixture is carried out by crosslinking of groups present in the mixture, wherein the di-functional and/or higher-functional compound is selected from
(a) di-functional and/or higher-functional isocyanates, wherein the mixture cures by crosslinking to form a polyurethane, or
(b) di-functional or higher-functional epoxides, wherein said mixture is crosslinked, or
(c) di-functional and/or higher-functional saturated, aliphatic or aromatic carboxylic acids or carboxylic acid derivatives, wherein the mixture is crosslinked to a polymer, to form a saturated polyester-polyamide-copolymer, or
(d) α,β-unsaturated activated carboxylic acids or derivatives, followed by curing the mixture by radical polymerization of the present unsaturated C=C double bonds, to form a polyester.

10. A process according to claim 2, which is carried out with an aminolysis reagent of formula (1) or (2), wherein X in formulae (1) or (2) is NH₂ or NHR"', wherein R'" is an alkyl group or an unsubstituted or alkyl-substituted aryl group, and wherein the curing of the mixture is carried out by adding a further component, wherein the di-functional and/or higher-functional compound is selected from
(b) di-functional or higher-functional epoxides, wherein the mixture is crosslinked with an amine or anhydride to form an epoxy polymer, or
(c) di-functional and/or higher-functional unsaturated, aliphatic or aromatic carboxylic acids or carboxylic acid derivatives, wherein said mixture is polymerized and crosslinked by the addition of styrene, to form an unsaturated polyester-polyamide-copolymer.

11. A process according to claim 2, which is carried out with an aminolysis reagent of formula (1) or (2), wherein said material has been formed by aminolysis with ammonia and wherein the curing of the mixture is effected by crosslinking of groups present in the mixture, wherein the di-functional and/or higher-functional compound is selected from
(a) di-functional and/or higher-functional isocyanates, wherein the mixture cures by crosslinking to form a polyurethane, or
(b) di-functional or higher-functional epoxides, wherein said mixture is crosslinked, or
(c) di-functional and/or higher-functional saturated, aliphatic or aromatic carboxylic acids or carboxylic acid derivatives, wherein the mixture is crosslinked to a polymer, to form a saturated polyester-polyamide-copolymer, or
(d) α,β-unsaturated activated carboxylic acids or derivatives, followed by curing the mixture by radical polymerization of the present unsaturated C=C double bonds, to form a polyester,
(e1) aldehydes, preferably formaldehyde, with the proviso that the cyanurate polymer subjected to aminolysis has been formed using aliphatic cyanates, to form a melamine resin.
(e2) aldehydes, preferably formaldehyde, with the proviso that the cyanurate polymer subjected to aminolysis has been formed using aromatic cyanates, to form a melamine-phenol resin.

12. A process according to claim 2, wherein said material has been formed by aminolysis with ammonia and wherein the curing of the mixture is effected by the addition of a further component, wherein the di-functional and/or higher-functional compound is selected from
(b) di-functional or higher-functional epoxides, said mixture being crosslinked with an amine or anhydride to form an epoxy polymer, or
(c) di-functional and/or higher-functional unsaturated, aliphatic or aromatic carboxylic acids or carboxylic acid derivatives, wherein said mixture is polymerized and crosslinked by the addition of styrene, to form an unsaturated polyester-polyamide-copolymer.

13. A process according to claim 2, which is carried out with an alcoholysis reagent of formula (3), wherein the curing of the mixture is effected by crosslinking of groups present in the mixture, wherein the di-functional and/or higher-functional compound is selected from
(a) di-functional and/or higher-functional isocyanates, wherein the mixture is cured by crosslinking to form a polyurethane, or
(c) di-functional and/or higher-functional saturated, aliphatic or aromatic carboxylic acids or carboxylic acid derivatives, wherein the mixture is crosslinked to a polymer, to form a saturated polyester, or
(d) α,β-unsaturated activated carboxylic acids or derivatives, followed by curing the mixture by radical polymerization of the present unsaturated C=C double bonds, to form a polyester, or
(e) aldehydes, preferably formaldehyde, with the proviso that the cyanurate polymer subjected to alcoholysis has been formed using aromatic cyanates, whereby a phenolic resin is formed.

14. A process according to claim 2, which is carried out with an alcoholysis reagent of formula (3), wherein the curing of the mixture is effected by the addition of a further component, wherein the di-functional and/or higher-functional compound is selected from
(b) epichlorohydrin, and the curing of the mixture to an epoxy polymer is effected by the addition of an amine or an anhydride, or
(c) di-functional and/or higher-functional unsaturated, aliphatic or aromatic carboxylic acids or carboxylic acid derivatives, wherein said mixture is polymerized and crosslinked by the addition of styrene, to form an unsaturated polyester.

15. A process according to any one of claims 1 to 14, comprising providing a polycyanurate-containing material and carrying out an aminolysis and/or alcoholysis on said material to obtain the aminolysed and/or alcoholysed product.

16. A process according to claim 15, wherein the polycyanurate-containing material is reacted without mechanical pulverization and without the aid of a solvent in the aminolysis reagent or alcoholysis reagent.

## Revendications

1. Procédé de préparation d'une matière polymère organique, dont la préparation nécessite au moins un composé contenant des groupes hydroxyle ou amino en tant que composant de départ, comprenant les étapes suivantes:
- fournir une matière obtenue par aminolyse et/ou alcoolyse d'un polymère de cyanurate et enlever ensuite l'agent d'aminolyse et/ou d'alcoolyse,
- faire réagir cette matière sans autre traitement préalable avec au moins un composé, choisi parmi les composés bi- et/ou polyfonctionnels dont les groupes fonctionnels sont susceptibles de réagir avec des groupes hydroxyle ou des groupes amino, ou parmi les aldéhydes, et
- faire durcir le mélange en mettant en oeuvre une réaction de réticulation.

2. Procédé selon la revendication 1, dans lequel on met en oeuvre ladite matière par aminolyse avec un réactif d'aminolyse, choisi parmi l'ammoniac, une amine de la formule (1) NH₂-R"-X (1) ou une aminé de la formule (2) R'-NH-R"-X (2) et/ou par alcoolyse au moyen d'un réactif d'alcoolyse, choisi parmi des composés hydroxyle de la formule (3) R"'-OH (3), dans lesquelles R" est un radical hydrocarboné divalent le cas échéant substitué, X est choisi parmi H, OH, NH₂ et NHR', et R' est un groupe alkyle non substitué ou substitué avec au moins un groupe hydroxyle ou un groupe aryle non substitué ou substitué avec alkyle et R'" est un groupe alkyle non substitué ou substitué avec au moins un groupe hydroxyle ou un groupe aryle non substitué ou substitué, dans lequel le groupe aryle est dans ce dernier cas substitué avec un ou plusieurs substituant(s), choisi(s) parmi alkyle, aryle, hydroxyle, hydroxyalkyle et hydroxyaryle.

3. Procédé selon la revendication 2, exécuté avec un réactif d'aminolyse de la formule (1) ou (2), dans lequel X dans les formules (1) ou (2) signifie OH et R est un groupe alkylène ou alcénylène à chaîne droite ou ramifié ou cyclique, et dans lequel le durcissement du mélange est effectué par une réticulation de groupes présents dans le mélange, dans lequel le composé bi- et/ou polyfonctionnel est choisi parmi
(a) les isocyanates bi- et/ou polyfonctionnels, dans lequel le mélange durcit par réticulation en un polyuréthane, ou
(c) les acides carboxyliques ou les dérivés des acides carboxyliques bi- et/ou polyfonctionnels saturés, aliphatiques ou aromatiques, dans lequel le mélange est réticulé en un polymère, dans lequel un polyester saturé est formé, ou
(d) les acides carboxyliques ou leurs dérivés activés non saturés α,β, puis le mélange est durci par polymérisation radicalaire des doubles liaisons C=C non saturées présentes, dans lequel un polyester est formé, ou
(e) les aldéhydes, de préférence le formaldéhyde, avec la condition que le polymère de cyanurate soumis à l'aminolyse soit obtenu par utilisation de cyanates aromatiques, formant ainsi une résine phénolique.

4. Procédé selon la revendication 2, exécuté avec un réactif d'aminolyse de la formule (1) ou (2), dans lequel X dans les formules (1) ou (2) signifie OH et R est un groupe alkylène ou alcénylène à chaîne droite ou ramifié ou cyclique, et dans lequel le durcissement du mélange est effectué par l'ajout d'un autre composant, dans lequel le composé bi- et/ou polyfonctionnel est choisi parmi
(b) l'épichlorhydrine et le durcissement du mélange en un polymère d'époxyde est provoqué par l'ajout d'une aminé ou d'un anhydride, ou
(c) les acides carboxyliques ou les dérivés des acides carboxyliques bi- et/ou polyfonctionnels non saturés, aliphatiques ou aromatiques, dans lequel le mélange est polymérisé et est réticulé par l'ajout de styrène, dans lequel un polyester non saturé est formé.

5. Procédé selon la revendication 2, exécuté avec un réactif d'aminolyse de la formule (1) ou (2), dans lequel X dans les formules (1) ou (2) signifie OH et R" est un groupe arylène non substitué ou substitué avec alkyle, et dans lequel le durcissement du mélange est effectué par une réticulation de groupes présents dans le mélange, dans lequel le composé bi- et/ou polyfonctionnel est choisi parmi
(a) les isocyanates bi- et/ou polyfonctionnels, dans lequel le mélange durcit par réticulation en un polyuréthane, ou
(c) les acides carboxyliques ou les dérivés des acides carboxyliques bi- et/ou polyfonctionnels saturés, aliphatiques ou aromatiques, dans lequel le mélange est réticulé en un polymère, dans lequel un polyester saturé est formé, ou
(d) les acides carboxyliques ou leurs dérivés activés non saturés α,β, puis le mélange est durci par polymérisation radicalaire des doubles liaisons C=C non saturées présentes, dans lequel un polyester est formé, ou
(e) les aldéhydes, de préférence le formaldéhyde, avec la condition que le polymère de cyanurate soumis à l'aminolyse soit obtenu par utilisation de cyanates aromatiques, formant ainsi une résine phénolique, ou
(f) le bromure de cyanogène, dans lequel il se forme un mélange composé de ou contenant au moins des cyanates bifonctionnels, qui peut être réticulé thermiquement ou qui est réticulé en utilisant des groupes hydroxyle aromatiques restants et forme ainsi un polycyanurate.

6. Procédé selon la revendication 2, exécuté avec un réactif d'aminolyse de la formule (1) ou (2), dans lequel X dans les formules (1) ou (2) signifie OH et R" est un groupe arylène non substitué ou substitué avec alkyle, et dans lequel le durcissement du mélange est effectué par l'ajout d'un autre composant, dans lequel le composé bi- et/ou polyfonctionnel est choisi parmi
(b) l'épichlorhydrine, et le durcissement du mélange en un polymère d'époxyde est provoqué par l'ajout d'une amine ou d'un anhydride, ou
(c) les acides carboxyliques ou les dérivés des acides carboxyliques bi- et/ou polyfonctionnels non saturés, aliphatiques ou aromatiques, dans lequel le mélange est polymérisé et est réticulé par l'ajout de styrène, dans lequel un polyester non saturé est formé, ou
(f) le bromure de cyanogène, dans lequel il se forme un mélange composé de ou contenant au moins des cyanates bifonctionnels, et le durcissement est effectué par l'ajout de cyanates, phénols ou autres co-réactifs mono- et bi- et/ou polyfonctionnels qui copolymérisent, dans lequel il apparaît par des réactions de groupes cyanate avec des groupes cyanate, des groupes OH aromatiques ou d'autres groupes fonctionnels, des structures de réticulation, qui forment un copolymère de cyanurate.

7. Procédé selon la revendication 2, exécuté avec un réactif d'aminolyse de la formule (1) ou (2), dans lequel X dans les formules (1) ou (2) signifie H et dans lequel le durcissement du mélange est effectué par une réticulation de groupes présents dans le mélange, dans lequel le composé bi- et/ou polyfonctionnel est choisi parmi
(a) les isocyanates bi- et/ou polyfonctionnels, dans lequel le mélange durcit par réticulation en un polyuréthane, ou
(c) les acides carboxyliques ou les dérivés des acides carboxyliques bi- et/ou polyfonctionnels saturés, aliphatiques ou aromatiques, dans lequel le mélange est réticulé en un polymère, dans lequel un polyester saturé est formé, ou
(d) les acides carboxyliques ou leurs dérivés activés non saturés α,β, puis le mélange est durci par polymérisation radicalaire des doubles liaisons C=C non saturées présentes, dans lequel un polyester est formé, ou
(e) les aldéhydes, de préférence le formaldéhyde, avec la condition que le polymère de cyanurate soumis à l'aminolyse soit obtenu par utilisation de cyanates aromatiques, formant ainsi une résine phénolique, ou
(f) le bromure de cyanogène, dans lequel il se forme un mélange composé de ou contenant au moins des cyanates bifonctionnels, qui peut être réticulé thermiquement ou qui est réticulé en utilisant des groupes hydroxyle aromatiques restants et forme ainsi un polycyanurate.

8. Procédé selon la revendication 2, exécuté avec un réactif d'aminolyse de la formule (1) ou (2), dans lequel X dans les formules (1) ou (2) signifie H et dans lequel le durcissement du mélange est effectué par l'ajout d'un autre composant, dans lequel le composé bi- et/ou polyfonctionnel est choisi parmi
(b) l'épichlorhydrine, et le durcissement du mélange en un polymère d'époxyde est provoqué par l'ajout d'une amine ou d'un anhydride, ou
(c) les acides carboxyliques ou les dérivés des acides carboxyliques bi- et/ou polyfonctionnels non saturés, aliphatiques ou aromatiques, dans lequel le mélange est polymérisé et est réticulé par l'ajout de styrène, dans lequel un polyester non saturé est formé, ou
(f) le bromure de cyanogène, dans lequel il se forme un mélange composé de ou contenant au moins des cyanates bifonctionnels, et le durcissement est effectué par l'ajout de cyanates, phénols ou autres co-réactifs mono- et bi- et/ou polyfonctionnels qui copolymérisent, dans lequel il apparaît par des réactions de groupes cyanate avec des groupes cyanate, des groupes OH aromatiques ou d'autres groupes fonctionnels, des structures de réticulation, qui forment un copolymère de cyanurate.

9. Procédé selon la revendication 2, exécuté avec un réactif d'aminolyse de la formule (1) ou (2), dans lequel X dans les formules (1) ou (2) signifie NH₂ ou NHR"', dans lequel R'" est un groupe alkyle ou un groupe aryle non substitué ou substitué avec alkyle, et dans lequel le durcissement du mélange est effectué par une réticulation de groupes présents dans le mélange, dans lequel le composé bi- et/ou polyfonctionnel est choisi parmi
(a) les isocyanates bi- et/ou polyfonctionnels, dans lequel le mélange durcit par réticulation en un polyuréthane, ou
(b) les époxydes bi- et/ou polyfonctionnels, dans lequel le mélange est réticulé, ou
(c) les acides carboxyliques ou les dérivés des acides carboxyliques bi- et/ou polyfonctionnels saturés, aliphatiques ou aromatiques, dans lequel le mélange est réticulé en un polymère, dans lequel un copolymère polyester-polyamide saturé est formé, ou
(d) les acides carboxyliques ou leurs dérivés activés non saturés α,β, puis le mélange est durci par polymérisation radicalaire des doubles liaisons C=C non saturées présentes, dans lequel un polyester est formé.

10. Procédé selon la revendication 2, exécuté avec un réactif d'aminolyse de la formule (1) ou (2), dans lequel X dans les formules (1) ou (2) signifie NH₂ ou NHR"', dans lequel R'" est un groupe alkyle ou un groupe aryle non substitué ou substitué avec alkyle, et dans lequel le durcissement du mélange est effectué par l'ajout d'un autre composant, dans lequel le composé bi- et/ou polyfonctionnel est choisi parmi
(b) les époxydes bi- et/ou polyfonctionnels, dans lequel le mélange est réticulé avec une amine ou un anhydride et il se forme un polymère d'époxyde, ou
(c) les acides carboxyliques ou les dérivés des acides carboxyliques bi- et/ou polyfonctionnels non saturés, aliphatiques ou aromatiques, dans lequel le mélange est polymérisé et est réticulé par l'ajout de styrène, dans lequel un copolymère polyester-polyamide non saturé est formé.

11. Procédé selon la revendication 2, exécuté avec un réactif d'aminolyse de la formule (1) ou (2), dans ladite matière est obtenue par aminolyse avec l'ammoniac et dans lequel le durcissement du mélange est effectué par une réticulation de groupes présents dans le mélange, dans lequel le composé bi- et/ou polyfonctionnel est choisi parmi
(a) les isocyanates bi- et/ou polyfonctionnels, dans lequel le mélange durcit par réticulation en un polyuréthane, ou
(b) les époxydes bi- et/ou polyfonctionnels, dans lequel le mélange est réticulé, ou
(c) les acides carboxyliques ou les dérivés des acides carboxyliques bi- et/ou polyfonctionnels saturés, aliphatiques ou aromatiques, dans lequel le mélange est réticulé en un polymère, dans lequel un copolymère polyester-polyamide saturé est formé, ou
(d) les acides carboxyliques ou leurs dérivés activés non saturés α,β, puis le mélange est durci par polymérisation radicalaire des doubles liaisons C=C non saturées présentes, dans lequel un polyester est formé,
(e1) les aldéhydes, de préférence le formaldéhyde, avec la condition que le polymère de cyanurate soumis à l'aminolyse soit obtenu par utilisation de cyanates aliphatiques, formant ainsi une résine mélaminique,
(e2) les aldéhydes, de préférence le formaldéhyde, avec la condition que le polymère de cyanurate soumis à l'aminolyse soit obtenu par utilisation de cyanates aromatiques, formant ainsi une résine mélaminique-phénolique.

12. Procédé selon la revendication 2, dans lequel ladite matière est obtenue par aminolyse avec l'ammoniac et dans lequel le durcissement du mélange est effectué par l'ajout d'un autre composant, dans lequel le composé bi- et/ou polyfonctionnel est choisi parmi
(b) les époxydes bi- et/ou polyfonctionnels, dans lequel le mélange est réticulé avec une amine ou un anhydride et il se forme un polymère d'époxyde, ou
(c) les acides carboxyliques ou les dérivés des acides carboxyliques bi- et/ou polyfonctionnels non saturés, aliphatiques ou aromatiques, dans lequel le mélange est polymérisé et est réticulé par l'ajout de styrène, dans lequel un copolymère polyester-polyamide non saturé est formé.

13. Procédé selon la revendication 2, exécuté avec un réactif d'alcoolyse de la formule (3), formule (3), dans lequel le durcissement du mélange est effectué par une réticulation de groupes présents dans le mélange, dans lequel le composé bi- et/ou polyfonctionnel est choisi parmi
(a) les isocyanates bi- et/ou polyfonctionnels, dans lequel le mélange durcit par réticulation en un polyuréthane, ou
(c) les acides carboxyliques ou les dérivés des acides carboxyliques bi- et/ou polyfonctionnels saturés, aliphatiques ou aromatiques, dans lequel le mélange est réticulé en un polymère, dans lequel un polyester saturé est formé, ou
(d) les acides carboxyliques ou leurs dérivés activés non saturés α,β, puis le mélange est durci par polymérisation radicalaire des doubles liaisons C=C non saturées présentes, dans lequel un polyester est formé, ou
(e) les aldéhydes, de préférence le formaldéhyde, avec la condition que le polymère de cyanurate soumis à l'alcoolyse soit obtenu par utilisation de cyanates aromatiques, formant ainsi une résine phénolique.

14. Procédé selon la revendication 2, exécuté avec un réactif d'alcoolyse de la formule (3), dans lequel le durcissement du mélange est effectué par l'ajout d'un autre composant, dans lequel le composé bi- et/ou polyfonctionnel est choisi parmi
(b) l'épichlorhydrine et le durcissement du mélange en un époxyde est provoqué par l'ajout d'une amine ou d'un anhydride, ou
(c) les acides carboxyliques ou les dérivés des acides carboxyliques bi- et/ou polyfonctionnels non saturés, aliphatiques ou aromatiques, dans lequel le mélange est polymérisé et est réticulé par l'ajout de styrène, dans lequel un polyester non saturé est formé.

15. Procédé selon l'une quelconque des revendications 1 à 14, comprenant la fourniture d'une matière contenant du polycyanurate et l'exécution d'une aminolyse et/ou d'une alcoolyse sur cette matière, afin d'obtenir un produit aminolysé et/ou alcoolysé.

16. Procédé selon la revendication 15, dans lequel on fait réagir la matière contenant du polycyanurate dans le réactif d'aminolyse et/ou dans le réactif d'alcoolyse sans broyage mécanique et sans recourir à un solvant.
